# EUROPEAN PATENT APPLICATION

(11) **EP 4 549 814 A1**
(43) Date of publication of application: **07.05.2025**
(21) Application number: 23831397.7
(22) Date of filing: 26.06.2023
(51) Int. Cl.: F21S 41/365, F21S 41/148, F21S 41/26, F21S 41/265, F21S 41/32, F21S 41/33, F21S 41/39, F21S 41/43, F21S 41/47, F21W 102/155, F21W 102/18, F21W 102/19, F21W 102/20, F21Y 115/10

(54) **VEHICLE LAMP**

(30) Priority: 28.06.2022 JP 2022103656; 28.06.2022 JP 2022103657; 28.06.2022 JP 2022103658
(71) Applicant: Koito Manufacturing Co., Ltd., Tokyo 141-0001 (JP)
(72) Inventor: TATSUKAWA, Masashi, Shizuoka-shi, Shizuoka 424-8764 (JP)
(74) Representative: Cabinet Beau de Loménie
(86) International application number: PCT/JP2023/023649
(87) International publication number: WO 2024/004957

(57) **Abstract**

A projection lens (32B) of a second lamp unit (30B) is formed so as to extend from the end thereof on a first lamp unit (30A) side toward the opposite end while being inclined to the lamp rear side. The first lamp unit (30A) is provided with first and second additional reflectors (42, 44) that sequentially reflect light emitted from a light source (34A) toward the projection lens (32B) of the second lamp unit (30B). The second additional reflector (44) is disposed on the side of the light source (34A) opposite to the second lamp unit (30B). In the first lamp unit (30A), light emitted from the light source (34A), sequentially reflected by the first and second additional reflectors (42, 44), and then emitted forward of the lamp through the projection lens (32B), is used as laterally emitted light directed in a direction greatly inclined laterally from the lamp front direction.

## Description

### TECHNICAL FIELD

The present disclosure relates to a vehicle lamp including a first lamp unit and a second lamp unit.

### BACKGROUND ART

A vehicle lamp including a first lamp unit and a second lamp unit arranged side by side in a left-right direction is known. The first lamp unit and the second lamp unit each include a projection lens, a light source disposed on the rear of the lamp with respect to a rear focal point of the projection lens, and a reflector that reflects light emitted from the light source toward the projection lens.

A vehicle lamp for forming a light distribution pattern for low beam is known. The vehicle lamp reflects light emitted from a light source disposed on the rear of the lamp with respect to a rear focal point of a projection lens toward the projection lens by a reflector that covers the light source from the above. Further, the vehicle lamp shields a part of the reflected light from the reflector by a shade arranged between the reflector and the projection lens to form a cutoff line of the light distribution pattern for low beam.

The vehicle lamp of Patent Literature 1 forms a main region of the light distribution pattern for low beam by light emitted from the first lamp unit, and forms a diffusion region of the light distribution pattern for low beam by light emitted from the second lamp unit.

The vehicle lamp of Patent Literature 1 is provided with, as a shade in each of the first lamp unit and the second lamp unit, an upward reflection surface that reflects the reflected light from the reflector upward toward the projection lens. Accordingly, a luminous flux utilization rate for the light emitted from the light source is improved.

### CITATION LIST

### PATENT LITERATURE

Patent Literature 1: WO2013/183240

### SUMMARY OF INVENTION

### TECHNICAL PROBLEM

The vehicle lamp of Patent Literature 1 can widely illuminate a vehicle front traveling path by a light distribution pattern formed by light emitted from the first lamp unit and the second lamp unit.

However, in consideration of the turning travel of the vehicle (for example, when traveling on a curve or turning right or left), it is preferred to further increase a lateral illumination angle in the vehicle front traveling path.

An object of the present disclosure is to provide a vehicle lamp including a first lamp unit and a second lamp unit arranged side by side in a left-right direction, and capable of sufficiently securing a lateral illumination angle in a vehicle front traveling path.

In order to increase the luminous flux utilization rate of the vehicle lamp, it is preferred to enlarge reflection surface shapes of the reflectors of the first lamp unit and the second lamp unit and to cause a larger amount of light emitted from the light source to incident on the projection lens.

However, when the reflection surface shape of each reflector is enlarged in each of the first lamp unit and the second lamp unit arranged side by side in the left-right direction, it is difficult to sufficiently secure a size of the reflection surface shape due to the interference between the reflectors.

An object of the present disclosure is to provide a vehicle lamp that includes a first lamp unit and a second lamp unit arranged side by side in a left-right direction, is small in size, and can increase a luminous flux utilization rate.

In addition, when a light distribution pattern for low beam is formed by light emitted from the vehicle lamp, it is preferred to form a light distribution pattern for OHS illumination (that is, a light distribution pattern with which an overhead sign provided above a vehicle front road surface is illuminated) in a space above the cutoff line.

At this time, it is preferred not to increase the number of components of the vehicle lamp as much as possible.

An object of the present disclosure is to provide a vehicle lamp including a first lamp unit and a second lamp unit which form a light distribution pattern for low beam, and capable of forming a light distribution pattern for OHS illumination without increasing the number of components of the vehicle lamp.

### SOLUTION TO PROBLEM

The present disclosure achieves the object by effectively using the first lamp unit and the second lamp unit.

A vehicle lamp according to the present disclosure is
a vehicle lamp including: a first lamp unit and a second lamp unit arranged side by side in a left-right direction, in which
the first lamp unit and the second lamp unit each include a projection lens, a light source disposed on the rear of the lamp with respect to a rear focal point of the projection lens, and a reflector configured to reflect light emitted from the light source toward the projection lens,
the projection lens of the second lamp unit extends obliquely toward the rear of the lamp from an end portion on a first lamp unit side to an end portion on an opposite side thereof,
the first lamp unit includes a first additional reflector and a second additional reflector configured to sequentially reflect the light emitted from the light source of the first lamp unit toward the projection lens of the second lamp unit, and
the second additional reflector is disposed on a side opposite to the second lamp unit with respect to the light source of the first lamp unit.

A type or a specific shape of the light distribution pattern formed by the light emitted from each of the first lamp unit and the second lamp unit is not particularly limited.

The specific shape of the projection lens of the second lamp unit is not particularly limited as long as the projection lens of the second lamp unit extends obliquely toward the rear of the lamp from the end portion on the first lamp unit side to the end portion on the opposite side thereof.

A specific arrangement or a reflection surface shape of the first additional reflector is not particularly limited as long as the first additional reflector reflects the light emitted from the light source of the first lamp unit toward the second additional reflector.

A specific arrangement or a reflection surface shape of the second additional reflector is not particularly limited as long as the second additional reflector is disposed on the side opposite to the second lamp unit with respect to the light source of the first lamp unit, and the reflected light from the first additional reflector is reflected toward the projection lens of the second lamp unit.

Further, the object of the present disclosure is achieved by devising the arrangement of the first lamp unit and the second lamp unit.

A vehicle lamp according to the present disclosure is
a vehicle lamp including: a first lamp unit and a second lamp unit arranged side by side in a left-right direction, in which
the first lamp unit and the second lamp unit each include a projection lens, a light source disposed on the rear of the lamp with respect to a rear focal point of the projection lens, and a reflector configured to reflect light emitted from the light source toward the projection lens,
the reflector of the first lamp unit reflects the light emitted from the light source of the first lamp unit as light converging in the left-right direction,
the light source of the second lamp unit is disposed on the front of the lamp with respect to the light source of the first lamp unit, and
the reflector of the second lamp unit is disposed on the front of the lamp with respect to the reflector of the first lamp unit in a positional relation in which the reflector of the second lamp unit partially overlaps with the reflector of the first lamp unit in a front view of the lamp.

A specific arrangement or a reflection surface shape of the reflector of the first lamp unit is not particularly limited as long as the reflector of the first lamp unit reflects the light emitted from the light source of the first lamp unit as the light converging in the left-right direction. In addition, the reflector of the first lamp unit may not necessarily reflect the light as convergent light in an up-down direction.

A specific arrangement of the light source of the second lamp unit is not particularly limited as long as the light source of the second lamp unit is disposed on the front of the lamp with respect to the light source of the first lamp unit.

A specific arrangement or a reflection surface shape of the reflector of the second lamp unit is not particularly limited as long as the reflector of the second lamp unit is disposed on the front of the lamp with respect to the reflector of the first lamp unit in the positional relation in which the reflector of the second lamp unit partially overlaps with the reflector of the first lamp unit in the front view of the lamp.

Further, the object of the present disclosure is achieved by devising a configuration of one of the first lamp unit and the second lamp unit.

A vehicle lamp according to the present disclosure is
a vehicle lamp including: a first lamp unit and a second lamp unit which form a light distribution pattern for low beam, in which
the first lamp unit and the second lamp unit each include a projection lens, a light source disposed on the rear of the lamp with respect to a rear focal point of the projection lens, a reflector that covers the light source from the above and that is configured to reflect light emitted from the light source toward the projection lens, and a shade arranged between the reflector and the projection lens and configured to shield a part of the reflected light from the reflector so as to form a cutoff line of the light distribution pattern for low beam, the shade being provided with an upward reflection surface for reflecting the reflected light from the reflector upward toward the projection lens,
the first lamp unit forms a main region of the light distribution pattern for low beam, and the second lamp unit forms a diffusion region of the light distribution pattern for low beam, and
the second lamp unit is provided with a first additional reflection surface that reflects the light emitted from the light source toward a front end portion of the upward reflection surface of the shade at a front end portion of the reflector, and a second additional reflection surface that reflects the light emitted from the light source and reflected by the first additional reflection surface toward the projection lens at a position in the front of and below the lamp with respect to the upward reflection surface of the shade, and the reflector and the shade are integrally formed.

A specific shape of the light distribution pattern formed by the light emitted from the first lamp unit is not particularly limited as long as the light distribution pattern forms the main region of the light distribution pattern for low beam. A specific shape of the light distribution pattern formed by the light emitted from the second lamp unit is not particularly limited as long as the light distribution pattern forms the diffusion region of the light distribution pattern for low beam.

A specific reflection surface shape of the first additional reflection surface is not particularly limited as long as the first additional reflection surface reflects the light emitted from the light source toward the front end portion of the upward reflection surface of the shade at the front end portion of the reflector.

A specific reflection surface shape of the second additional reflection surface is not particularly limited as long as the second additional reflection surface reflects the light emitted from the light source and reflected by the first additional reflection surface toward the projection lens at the position in the front of and below the lamp with respect to the upward reflection surface of the shade.

### ADVANTAGEOUS EFFECTS OF INVENTION

In the vehicle lamp according to the present disclosure, the first lamp unit and the second lamp unit are arranged side by side in the left-right direction, and each of the first lamp unit and the second lamp unit reflects the light emitted from the light source disposed on the rear of the lamp with respect to the rear focal point of the projection lens toward the projection lens by the reflector. Therefore, the vehicle lamp may form a required light distribution pattern by the light emitted from the first lamp unit and the second lamp unit.

The projection lens of the second lamp unit extends obliquely toward the rear of the lamp from the end portion on the first lamp unit side to the end portion on the opposite side thereof. The first lamp unit includes the first additional reflector and the second additional reflector that sequentially reflect the light emitted from the light source toward the projection lens of the second lamp unit. The second additional reflector is disposed on the side opposite to the second lamp unit with respect to the light source of the first lamp unit. Therefore, the vehicle lamp according to the present disclosure can exert the following operations and effects.

That is, the light emitted from the light source of the first lamp unit and then sequentially reflected by the first additional reflector and the second additional reflector is emitted toward the front of the lamp through the projection lens of the second lamp unit inclined toward the rear of the lamp. The emitted light is a lateral emission light directed in a direction largely inclined laterally from a front direction of the lamp.

Therefore, as the light distribution pattern formed by the light emitted from the entire vehicle lamp, a light distribution pattern for lateral illumination formed by the lateral emission light is added to an original light distribution pattern formed by the light emitted from the light source in each of the first lamp unit and the second lamp unit and then emitted toward the front of the lamp through the reflector and the projection lens. Accordingly, the lateral illumination angle in the vehicle front traveling path is sufficiently secured.

As described above, according to the present disclosure, the vehicle lamp including the first lamp unit and the second lamp unit arranged side by side in the left-right direction can sufficiently secure the lateral illumination angle in the vehicle front traveling path.

In the vehicle lamp according to the present disclosure, the first lamp unit and the second lamp unit are arranged side by side in the left-right direction, and each of the first lamp unit and the second lamp unit reflects the light emitted from the light source disposed on the rear of the lamp with respect to the rear focal point of the projection lens toward the projection lens by the reflector. Therefore, the vehicle lamp may form a required light distribution pattern by the light emitted from the first lamp unit and the second lamp unit.

The reflector of the first lamp unit reflects the light emitted from the light source of the first lamp unit as the light converging in the left-right direction. The light source of the second lamp unit is disposed on the front of the lamp with respect to the light source of the first lamp unit. The reflector of the second lamp unit is disposed on the front of the lamp with respect to the reflector of the first lamp unit in the positional relation in which the reflector of the second lamp unit partially overlaps with the reflector of the first lamp unit in the front view of the lamp. Therefore, the vehicle lamp according to the present disclosure can exert the following operations and effects.

That is, the reflector of the first lamp unit reflects the light emitted from the light source of the first lamp unit as the light converging in the left-right direction. Therefore, although the reflector of the first lamp unit is disposed on the rear of the lamp in the positional relation in which the reflector of the first lamp unit partially overlaps with the reflector of the second lamp unit in the front view of the lamp, the reflected light is hardly shielded by the reflector of the second lamp unit. In this manner, the reflector of the first lamp unit may cause the reflected light to incident on the projection lens of the first lamp unit without being substantially shielded by the reflector of the second lamp unit.

Accordingly, with the configuration of the first lamp unit, it is possible to enlarge the reflection surface shape of the reflector, and to cause a larger amount of light emitted from the light source to incident on the projection lens.

The reflector of the second lamp unit is disposed on the front of the lamp with respect to the reflector of the first lamp unit, and the reflected light of the reflector of the second lamp unit is not shielded by the reflector of the first lamp unit. Therefore, it is possible to easily enlarge the reflection surface shape of the reflector of the second lamp unit.

Therefore, it is possible to increase a luminous flux utilization rate of a vehicle lamp while avoiding the interference between the reflectors of the first lamp unit and the second lamp unit in advance.

In addition, the reflectors of the first lamp unit and the second lamp unit are arranged in the partially overlapping positional relation in the front view of the lamp. Therefore, a left-right width of the vehicle lamp can be reduced, and thus the vehicle lamp can be miniaturized.

As described above, according to the present disclosure, the vehicle lamp including the first lamp unit and the second lamp unit arranged side by side in the left-right direction can increase the luminous flux utilization rate while maintaining the miniaturization of the lamp.

The vehicle lamp according to the present disclosure includes a first lamp unit which forms a main region of a light distribution pattern for low beam and a second lamp unit which forms a diffusion region of the light distribution pattern for low beam. Therefore, the vehicle lamp may easily form the light distribution pattern for low beam with a light distribution suitable for the traveling of the vehicle.

The first lamp unit and the second lamp unit shield a part of the light emitted from the light source and reflected by the reflector by the shade arranged between the reflector and the projection lens to form a cutoff line of the light distribution pattern for low beam. The shade has an upward reflection surface that reflects the reflected light from the reflector upward toward the projection lens, and thus the luminous flux utilization rate of the light emitted from the light source can be increased.

The second lamp unit has the first additional reflection surface that reflects the light emitted from the light source toward the front end portion of the upward reflection surface of the shade at the front end portion of the reflector. Further, the second lamp unit has the second additional reflection surface that reflects the light emitted from the light source and reflected by the first additional reflection surface toward the projection lens at the position in the front of and below the lamp with respect to the upward reflection surface of the shade. Further, the reflector and the shade are integrally formed. Therefore, the vehicle lamp according to the present disclosure can exert the following operations and effects.

That is, in the second lamp unit, the reflected light from the first additional reflection surface of the reflector is reflected toward the projection lens by the second additional reflection surface of the shade. Accordingly, when the light distribution pattern for low beam is formed, a light distribution pattern for OHS illumination can be formed in the space above the cutoff line. The second lamp unit forms the diffusion region of the light distribution pattern for low beam. Therefore, a required light distribution pattern may be formed even though a width of the upward reflection surface of the shade in a front-rear direction of the lamp is reduced. Therefore, even though the reflector and the shade are integrally formed in the second lamp unit, the molding can be easily performed, and thus the number of components of the vehicle lamp can be reduced.

According to the present disclosure, the vehicle lamp including the first lamp unit and the second lamp unit which form the light distribution pattern for low beam can form a light distribution pattern for OHS illumination without increasing the number of components of the vehicle lamp.

### BRIEF DESCRIPTION OF DRAWINGS

[FIG. 1] FIG. 1 is a front view illustrating a vehicle lamp according to a first embodiment of the present disclosure.
[FIG. 2] FIG. 2 is a plan view illustrating a lamp unit assembly of the vehicle lamp in FIG. 1.
[FIG. 3] FIG. 3 is a cross-sectional view taken along a line III-III in FIG. 2.
[FIG. 4] FIG. 4 is a cross-sectional view taken along a line IV-IV in FIG. 2.
[FIG. 5] FIG. 5 is a perspective view illustrating the lamp unit assembly in FIG. 1.
[FIG. 6A] FIG. 6A is a diagram illustrating a light distribution pattern for low beam formed by light emitted from the vehicle lamp in FIG. 1 in phantom.
[FIG. 6B] FIG. 6B is a diagram illustrating a light distribution pattern for low beam formed by light emitted from the vehicle lamp in FIG. 1 in phantom.
[FIG. 7] FIG. 7 is a plan view illustrating a lamp unit assembly of a vehicle lamp according to a modification of the first embodiment.
[FIG. 8] FIG. 8 is a front view illustrating a vehicle lamp according to a second embodiment of the present disclosure.
[FIG. 9] FIG. 9 is a plan view illustrating a lamp unit assembly of the vehicle lamp in FIG. 8.
[FIG. 10] FIG. 10 is a cross-sectional view taken along a line X-X in FIG. 9.
[FIG. 11] FIG. 11 is a cross-sectional view taken along a line XI-XI in FIG. 9.
[FIG. 12] FIG. 12 is a perspective view illustrating the lamp unit assembly in FIG. 8.
[FIG. 13] FIG. 13 is a diagram illustrating a light distribution pattern for low beam formed by light emitted from the vehicle lamp in FIG. 8 in phantom.
[FIG. 14] FIG. 14 is a plan view illustrating a lamp unit assembly of a vehicle lamp according to a modification of the second embodiment.
[FIG. 15] FIG. 15 is a cross-sectional view taken along a line XV-XV in FIG. 14.
[FIG. 16A] FIG. 16A is a diagram illustrating a light distribution pattern for low beam in phantom, illustrating an operation of the modification of the second embodiment.
[FIG. 16B] FIG. 16B is a diagram illustrating a light distribution pattern for high beam in phantom, illustrating an operation of the modification of the second embodiment.
[FIG. 17] FIG. 17 is a front view illustrating a vehicle lamp according to a third embodiment of the present disclosure.
[FIG. 18] FIG. 18 is a plan view illustrating a lamp unit assembly of the vehicle lamp in FIG. 17.
[FIG. 19] FIG. 19 is a cross-sectional view taken along a line XIX-XIX in FIG. 18.
[FIG. 20] FIG. 20 is a cross-sectional view taken along a line XX-XX in FIG. 18.
[FIG. 21] FIG. 21 is a perspective view illustrating the lamp unit assembly in FIG. 17.
[FIG. 22] FIG. 22 is a diagram illustrating a light distribution pattern for low beam formed by light emitted from the vehicle lamp in FIG. 17 in phantom.
[FIG. 23] FIG. 23 is a plan view illustrating a lamp unit assembly of a vehicle lamp according to a modification of the third embodiment.
[FIG. 24] FIG. 24 is a diagram illustrating a light distribution pattern for low beam formed by light emitted from the vehicle lamp in phantom, illustrating an operation of the modification.

### DESCRIPTION OF EMBODIMENTS

Hereinafter, embodiments of the present disclosure will be described with reference to the drawings.

### First Embodiment

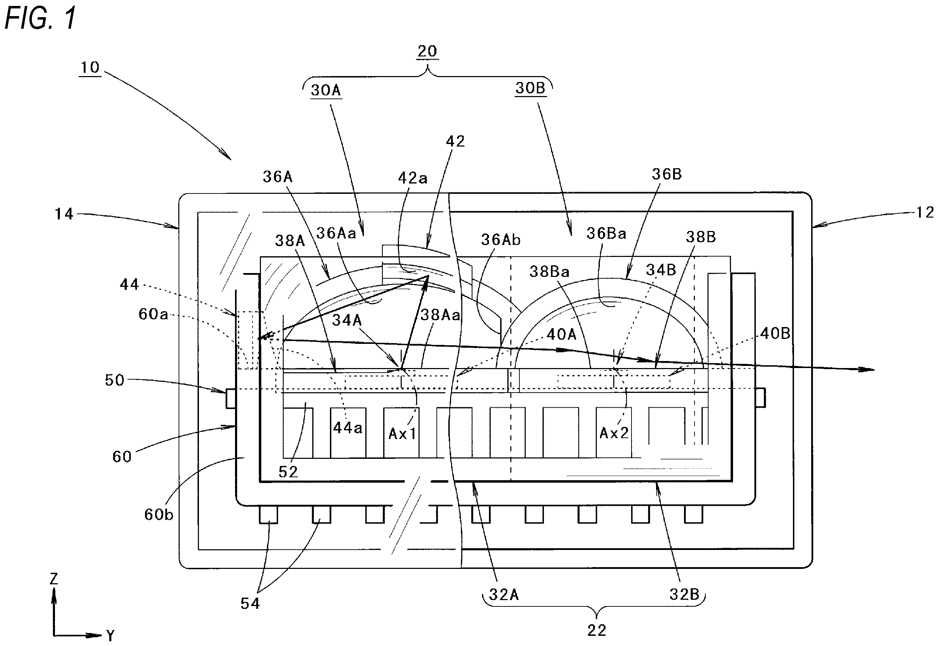

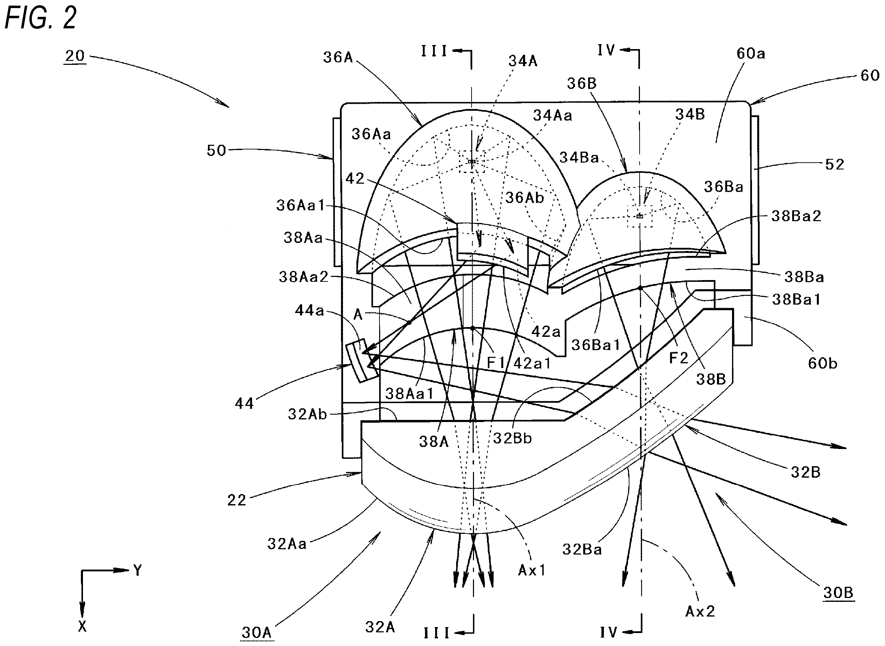

FIG. 1 is a front view illustrating a vehicle lamp 10 according to a first embodiment of the present disclosure. FIG. 2 is a plan view illustrating a lamp unit assembly 20 of the vehicle lamp 10.

In FIGS. 1 and 2, a direction indicated by X is the "front of lamp". A direction indicated by Y is a "left direction" ("right direction" in a front view of the lamp) orthogonal to the "front of the lamp". A direction indicated by Z is an "upward direction". The same applies to figures other than FIGS. 1 and 2.

As illustrated in FIGS. 1 and 2, the vehicle lamp 10 according to the present embodiment is a headlamp disposed at a left front end portion of a vehicle. The lamp unit assembly 20 is accommodated in a lamp chamber implemented by a lamp body 12 and a plain transparent cover 14 attached to a front end opening portion of the lamp body 12.

The lamp unit assembly 20 includes a first lamp unit 30A and a second lamp unit 30B. Each of the first lamp unit 30A and the second lamp unit 30B forms a light distribution pattern for low beam. The first lamp unit 30A and the second lamp unit 30B are integrally formed.

The first lamp unit 30A and the second lamp unit 30B are both implemented as projector-type lamp units, and are arranged side by side in the left-right direction (that is, a vehicle width direction). Specifically, the first lamp unit 30A is located on a right side, and the second lamp unit 30B is located on a left side.

The vehicle lamp 10 forms a main region of the light distribution pattern for low beam by light emitted from the first lamp unit 30A, and forms a diffusion region of the light distribution pattern for low beam by light emitted from the second lamp unit 30B. The vehicle lamp 10 further forms a light distribution pattern for lateral illumination. This will be described later.

Next, specific configurations of the first lamp unit 30A and the second lamp unit 30B will be described.

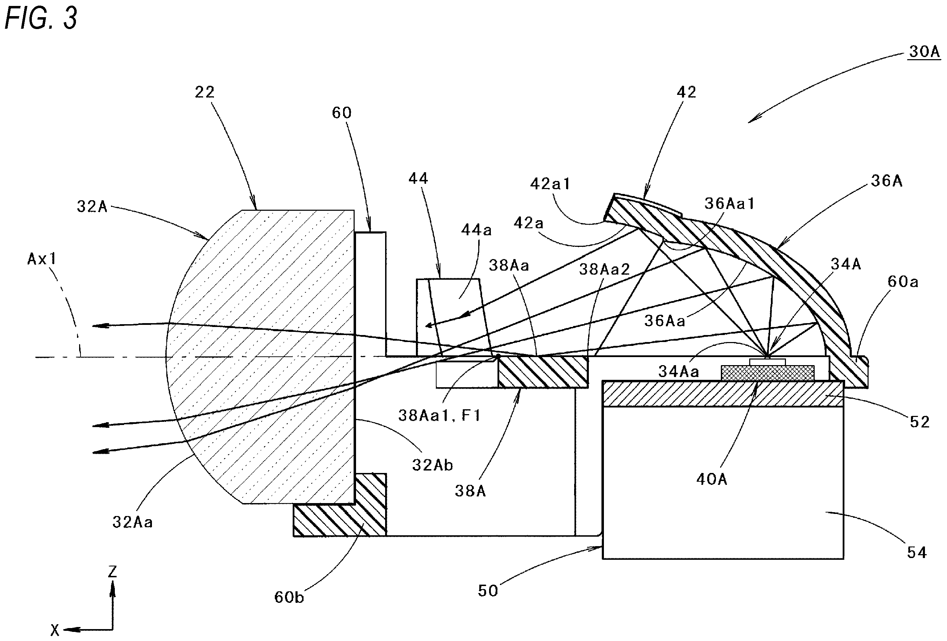

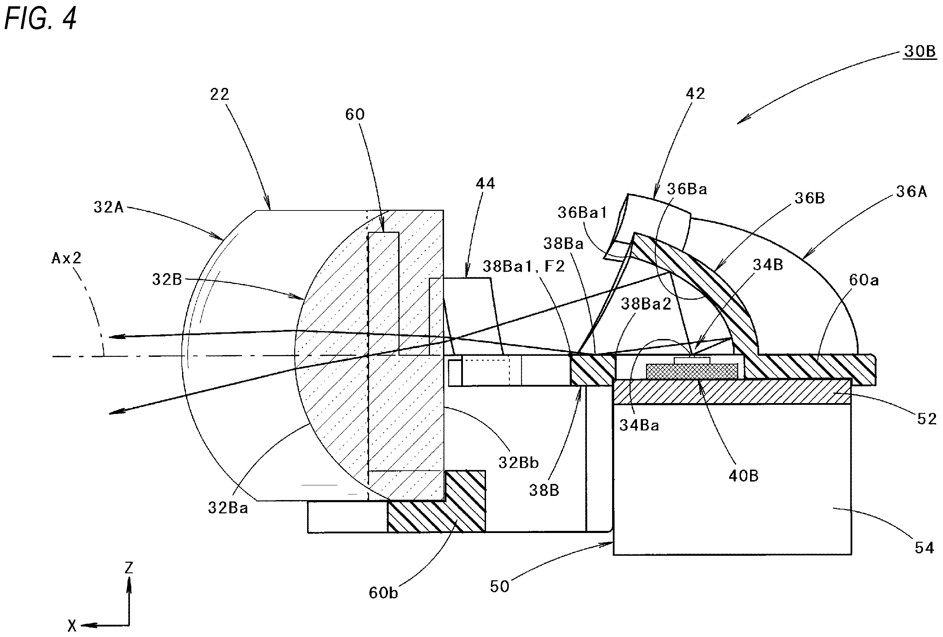

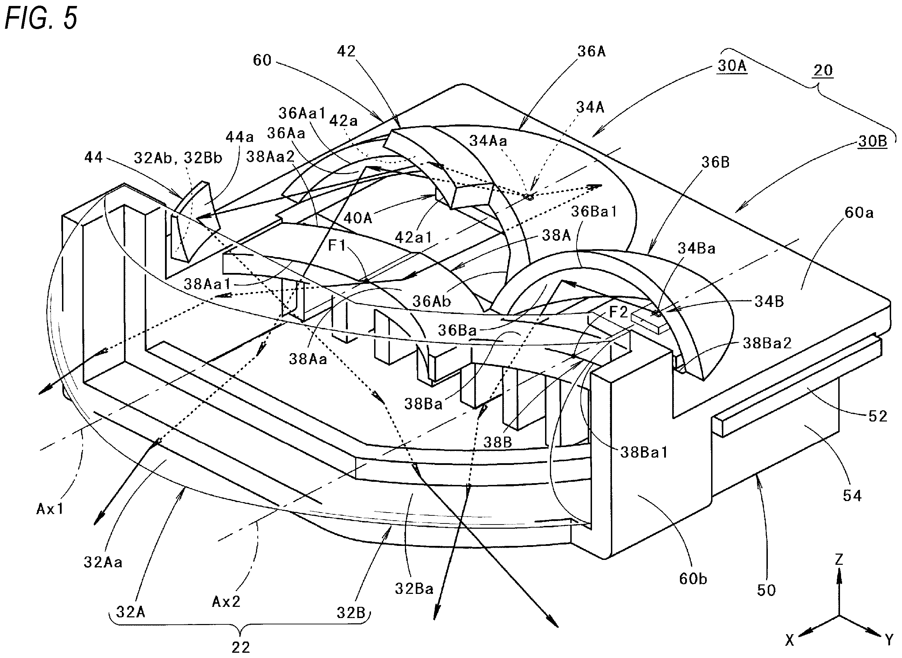

FIG. 3 is a cross-sectional view taken along a line III-III in FIG. 2. FIG. 4 is a cross-sectional view taken along a line IV-IV in FIG. 2. FIG. 5 is a perspective view illustrating the lamp unit assembly 20.

First, the specific configuration of the first lamp unit 30A will be described.

As illustrated in FIGS. 3 and 5, the first lamp unit 30A includes a projection lens 32A, a light source 34A, a reflector 36A, and a shade 38A. The projection lens 32A has an optical axis Ax1 extending in a front-rear direction of the lamp. The light source 34A is disposed on the rear of the lamp with respect to a rear focal point F1 of the projection lens 32A (more precisely, a rear focal point in a vertical cross section). The reflector 36A covers the light source 34A from the above, and reflects the light emitted from the light source 34A toward the projection lens 32A. The shade 38A is arranged between the reflector 36A and the projection lens 32A, and shields a part of the reflected light from the reflector 36A.

The projection lens 32A is a plano-convex aspheric lens having a front surface 32Aa that is a convex curved surface and a rear surface 32Ab that is a flat surface. The projection lens 32A projects a light source image formed on a rear focal point plane, which is a focal point plane including the rear focal point F1 of the projection lens 32A, as an inverted image, onto a virtual vertical screen in front of the lamp. The projection lens 32A has a horizontally long rectangular shape in the front view of the lamp.

The light source 34A is a light emitting element (specifically, a white light emitting diode), and has a light emitting surface 34Aa having a horizontally long rectangular shape. The light source 34A is supported by a substrate 40A with the light emitting surface 34Aa facing upward on the optical axis Ax1 of the projection lens 32A.

The reflector 36A causes the light emitted from the light source 34A to incident on the projection lens 32A as light converging in the left-right direction.

Specifically, the reflection surface 36Aa of the reflector 36A is implemented by a curved surface having a substantially elliptical surface shape with a light emitting center of the light source 34A as a first focal point. An eccentricity of the reflection surface 36Aa is set to gradually increase from the vertical cross section toward a horizontal cross section. Accordingly, the reflector 36A substantially converges the light emitted from the light source 34A to a point located on the front of the lamp with respect to the rear focal point F1 in the vertical cross section, and further displaces the convergence position toward the front of the lamp in the horizontal cross section.

The shade 38A has an upward reflection surface 38Aa that reflects a part of the reflected light from the reflector 36A upward toward the projection lens 32A. In the upward reflection surface 38Aa, a left region located on the left of the optical axis Ax1 (on a right side in the front view of the lamp) is implemented by a horizontal plane including the optical axis Ax1, and a right region located on the right of the optical axis Ax1 is implemented by a horizontal plane that is one step lower than the left region via a short slope.

A front end edge 38Aa1 of the upward reflection surface 38Aa of the shade 38A extends from the rear focal point F1 of the projection lens 32A toward both left and right sides in a curved manner toward the front of the lamp. A rear end edge 38Aa2 of the upward reflection surface 38Aa of the shade 38A also extends toward both left and right sides in a curved manner toward the front of the lamp. The rear end edge 38Aa2 of the upward reflection surface 38Aa is located on the front of the lamp with respect to the front end edge 36Aa1 of the reflection surface 36Aa of the reflector 36A. Accordingly, the shade 38A and the reflector 36A do not overlap each other in the plan view.

The vehicle lamp 10 according to the present embodiment includes, as a configuration of the first lamp unit 30A, the projection lens 32A, the light source 34A, the reflector 36A, and the shade 38A, as well as a first additional reflector 42 and a second additional reflector 44, the specific configuration of which will be described later.

Next, the specific configuration of the second lamp unit 30B will be described.

As illustrated in FIGS. 4 and 5, similar to the first lamp unit 30A, the second lamp unit 30B includes a projection lens 32B, a light source 34B, a reflector 36B, and a shade 38B. However, a shape of the projection lens 32B is different from a shape of the projection lens 32A. A shape of the reflector 36B is different from a shape of the reflector 36A. Further, a shape of the shade 38B is different from a shape of the shade 38A.

The projection lens 32B has the same up-down width as the projection lens 32A of the first lamp unit 30A, and extends obliquely toward the rear of the lamp from an end portion on a first lamp unit 30A side to an end portion on an opposite side thereof.

Specifically, the projection lens 32B extends in a toroidal lens shape from a right end portion of the projection lens 32B to the left direction in a curved manner toward the rear of the lamp. That is, a front surface 32Ba of the projection lens 32B extends in an arc shape with a convex curved vertical cross-sectional shape, and a rear surface 32Bb of the projection lens 32B is formed in a cylindrical surface shape. A curvature of the front surface 32Ba of the projection lens 32B is set such that a rear focal point F2 in a vertical cross section including an optical axis Ax2 as an axis line extending in the front-rear direction of the lamp so as to pass through a light emitting center of the light source 34B is located on the rear of the lamp with respect to the rear focal point F1 of the projection lens 32A.

The light source 34B is implemented by a light emitting element similar to the light source 34A of the first lamp unit 30A, and is disposed on the rear of the lamp with respect to the rear focal point F2 of the projection lens 32B. The light source 34B is supported by a substrate 40B in the front of the lamp with respect to the light source 34A, with a light emitting surface 34Ba of the light source 34B facing upward on the optical axis Ax2 of the projection lens 32B.

Similar to the reflector 36A of the first lamp unit 30A, the reflector 36B covers the light source 34B from the above, and causes the light emitted from the light source 34B to incident on the projection lens 32B as light converging in the left-right direction. A reflection surface 36Ba of the reflector 36B is also implemented by a curved surface having a substantially elliptical surface shape with the light emitting center of the light source 34B as a first focal point. However, the reflection surface 36Ba of the reflector 36B is smaller than the reflection surface 36Aa of the reflector 36A. A front end edge 36Ba1 of the reflection surface 36Ba extends obliquely toward the rear of the lamp from the right end portion toward a left end portion (that is, from the end portion on the first lamp unit 30A side to the end portion on the opposite side thereof).

The reflector 36B is disposed on the front of the lamp with respect to the reflector 36A in a positional relation in which the reflector 36B partially overlaps with the reflector 36A of the first lamp unit 30A in the front view of the lamp, and is formed integrally with the reflector 36A. Therefore, a left end portion of the reflection surface 36Aa of the reflector 36A is partially lost, and the lost portion is provided with a standing wall portion 36Ab that extends in a substantially vertical plane along an outer peripheral edge shape of the reflector 36B.

Accordingly, the reflection surface 36Aa of the reflector 36A is in a state in which a region in the vicinity of a left end portion of the standing wall portion 36Ab, which is located on the rear of the lamp, is hidden by the reflector 36B in the front view of the lamp. However, the reflection surface 36Aa of the reflector 36A reflects the light emitted from the light source 34A as the light converging in the left-right direction, and thus there is no large problem in the optical function.

Similar to the shade 38A of the first lamp unit 30A, the shade 38B shields a part of the reflected light from the reflector 36B. The shade 38B has an upward reflection surface 38Ba that reflects a part of the reflected light from the reflector 36B upward toward the projection lens 32B. A configuration of the upward reflection surface 38Ba of the shade 38B is different from a configuration of the upward reflection surface 38Aa of the shade 38A.

That is, the upward reflection surface 38Ba of the shade 38B is implemented by a horizontal plane including the optical axis Ax2. A width of the upward reflection surface 38Ba in the front-rear direction of the lamp is set to a value (specifically, 1/2 or less) smaller than that of a width of the upward reflection surface 38Aa of the shade 38A in the front-rear direction of the lamp.

A front end edge 38Ba1 of the upward reflection surface 38Ba passes through the rear focal point F2 of the projection lens 32B. Further, the front end edge 38Ba1 is curved so as to be convex toward the rear of the lamp in the plan view, and extends obliquely toward the rear of the lamp from the right end portion toward the left end portion.

A rear end edge 38Ba2 of the upward reflection surface 38Ba extends at a substantially constant interval from the front end edge 38Ba1 in the front of the lamp with respect to the front end edge 36Ba1 of the reflection surface 36Ba of the reflector 36B. Accordingly, the shade 38B and the reflector 36B do not overlap each other in the plan view.

In the lamp unit assembly 20, both the substrates 40A and 40B of the first lamp unit 30A and the second lamp unit 30B are supported by a metal heat sink 50, and the heat sink 50 is supported by a resin holder 60.

The holder 60 includes a horizontal flange portion 60a extending along the horizontal plane so as to surround outer peripheral portions of the reflectors 36A and 36B in the first lamp unit 30A and the second lamp unit 30B. The two reflectors 36A and 36B are formed integrally with the holder 60.

The heat sink 50 includes a body portion 52 extending in the left-right direction along the horizontal plane, and a plurality of heat-dissipating fins 54 extending downward from a lower surface of the body portion 52. The plurality of heat-dissipating fins 54 are arranged at intervals in the left-right direction. The heat sink 50 is supported by the holder 60 by bringing the body portion 52 of the heat sink 50 into contact with the horizontal flange portion 60a of the holder 60 from below.

The shades 38A and 38B of the first lamp unit 30A and the second lamp unit 30B are also formed integrally with the holder 60.

The projection lenses 32A and 32B of the first lamp unit 30A and the second lamp unit 30B are integrally formed as a projection lens assembly 22 and are supported by the holder 60.

That is, a front end portion of the holder 60 is provided with a frame portion 60b in which a left half portion extends along a vertical plane perpendicular to the front-rear direction of the lamp, and a left half portion extends obliquely toward the rear of the lamp. The frame portion 60b is formed in a horizontally long U-shape in the front view of the lamp, and has an L-shaped cross-sectional shape. The projection lens assembly 22 is supported by the holder 60 by bringing peripheral portions of the rear surfaces of the two projection lenses 32A and 32B into contact with the frame portion 60b of the holder 60 from the front of the lamp.

Next, configurations of the first additional reflector 42 and the second additional reflector 44 will be described.

The first additional reflector 42 and the second additional reflector 44 sequentially reflect the light emitted from the light source 34A of the first lamp unit 30A toward the projection lens 32B of the second lamp unit 30B.

The first additional reflector 42 protrudes from a front end edge of the reflector 36A toward the front of the lamp, and is formed integrally with the reflector 36A.

A reflection surface 42a of the first additional reflector 42 is implemented by a curved surface having a substantially elliptical surface shape. Specifically, the reflection surface 42a is implemented by a curved surface close to an ellipsoid, with the light emitting center of the light source 34A as the first focal point and a point A located on the right of and above the optical axis Ax1 between the first additional reflector 42 and the projection lens 32A as a second focal point (FIG. 2). The reflection surface 42a extends more widely to a left side than a right side of the optical axis Ax1 so as to straddle a position directly above the optical axis Ax1.

A front end edge 42a1 of the reflection surface 42a of the first additional reflector 42 is located on the rear of the lamp with respect to the rear end edge 38Aa2 of the upward reflection surface 38Aa of the shade 38A. Accordingly, the shade 38A and the first additional reflector 42 do not overlap each other in the plan view.

The second additional reflector 44 is arranged on the right of the optical axis Ax1 between the reflector 36A and the projection lens 32A. Specifically, the second additional reflector 44 is formed integrally with the holder 60 so as to extend upward from the horizontal flange portion 60a of the holder 60 in the vicinity of the right of the shade 38A. The second additional reflector 44 reflects the light emitted from the light source 34A and reflected by the first additional reflector 42 in a direction largely inclined leftward with respect to a front direction of the lamp, and causes the reflected light to incident on the projection lens 32B of the second lamp unit 30B.

A reflection surface 44a of the second additional reflector 44 is implemented by a curved surface close to a paraboloid with the point A as a focal point. Accordingly, the reflection surface 44a of the second additional reflector 44 reflects the reflected light from the first additional reflector 42 as light slightly spreading in an up-down direction and the left-right direction.

The light emitted from the light source 34A, sequentially reflected by the first additional reflector 42 and the second additional reflector 44, and incident on the projection lens 32B of the second lamp unit 30B is emitted from the projection lens 32B in the direction largely inclined leftward with respect to the front direction of the lamp, with a substantially uniform brightness.

The light emitted from the light source 34A and reflected by the standing wall portion 36Ab of the reflector 36A becomes light directed toward the rear of the lamp with respect to the second additional reflector 44, and thus is not incident on the reflection surface 44a of the second additional reflector 44.

As described above, in the lamp unit assembly 20, the reflectors 36A and 36B and the shades 38A and 38B of the first lamp unit 30A and the second lamp unit 30B, the first additional reflector 42 and the second additional reflector 44 of the first lamp unit 30A, and the holder 60 are integrally formed. The reflectors 36A and 36B, the shades 38A and 38B, the first additional reflector 42 and the second additional reflector 44, and the holder 60 do not have overlapping portions in the plan view, and thus when these elements are molded into a single injection molded product, a structure of a mold used for the injection molded product is simple.

In a state in which the lamp unit assembly 20 is incorporated into the vehicle lamp 10, the optical axes Ax1 and Ax2 of the first lamp unit 30A and the second lamp unit 30B extend downward by about 0.5° to 0.6° toward the front of the lamp with respect to the horizontal plane.

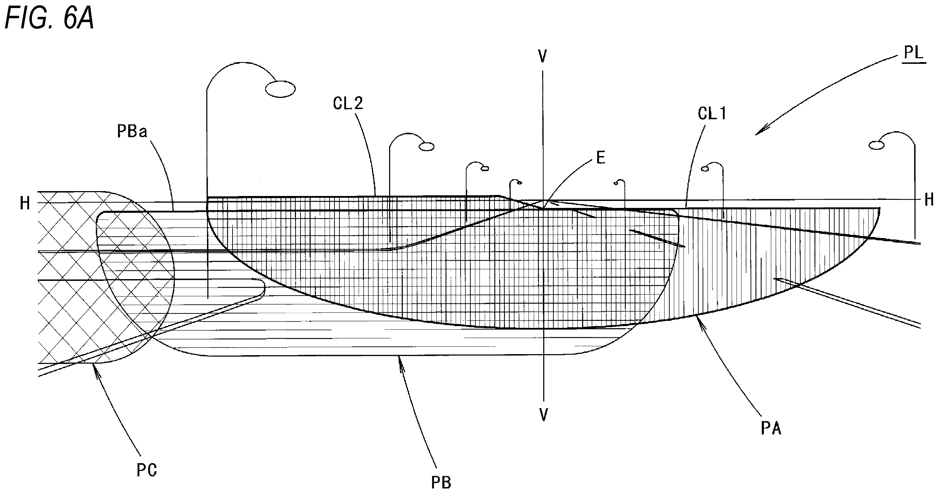

FIG. 6A is a diagram illustrating a light distribution pattern for low beam PL formed by the light emitted from the vehicle lamp 10 in phantom.

As illustrated in FIG. 6A, the light distribution pattern for low beam PL is a light distribution pattern for low beam for left light distribution, and has cutoff lines CL1 and CL2 which are stepped on the left and right on an upper end edge of the light distribution pattern for low beam PL. The cutoff lines CL1 and CL2 extend in a horizontal direction which are stepped on the left and right with respect to a line V-V passing through H-V, which is a vanishing point in the front direction of the lamp, in a vertical direction. A portion on the right of the line V-V is provided as the oncoming-traffic lane side cutoff line CL1. A portion on the left of the line V-V is provided as the host vehicle lane side cutoff line CL2 that is gradually raised from the oncoming-traffic lane side cutoff line CL1 via the inclined portion.

In the light distribution pattern for low beam PL, an elbow point E, which is an intersection of the oncoming-traffic lane side cutoff line CL1 and the line V-V, is located at about 0.5° to 0.6° below the H-V. This is because the optical axes Ax1 and Ax2 of the first lamp unit 30A and the second lamp unit 30B extend downward by about 0.5° to 0.6° toward the front of the lamp with respect to the horizontal plane.

The light distribution pattern for low beam PL is formed as a light distribution pattern combined by a main region light distribution pattern PA, a diffusion region light distribution pattern PB, and a light distribution pattern for lateral illumination PC. The main region light distribution pattern PA and the light distribution pattern for lateral illumination PC are formed by the light emitted from the first lamp unit 30A. The diffusion region light distribution pattern PB is formed by the light emitted from the second lamp unit 30B.

The main region light distribution pattern PA is a light distribution pattern constituting a main region of the light distribution pattern for low beam PL. The cutoff lines CL1 and CL2 including the elbow point E are implemented by the main region light distribution pattern PA.

Specifically, the main region light distribution pattern PA is formed by projecting a light source image of the light source 34A formed on the rear focal point plane of the projection lens 32A by the light emitted from the light source 34A and reflected by the reflector 36A as an inverted projection image on the virtual vertical screen by the projection lens 32A. The cutoff lines CL1 and CL2 of the main region light distribution pattern PA are formed as inverted projection images of the front end edge 38Aa1 of the upward reflection surface 38Aa of the shade 38A. At this time, the upward reflection surface 38Aa is formed to have a large front-rear width, and thus the main region light distribution pattern PA is formed as a light distribution pattern in which regions in the vicinity of the cutoff lines CL1 and CL2 are sufficiently bright.

The diffusion region light distribution pattern PB is a light distribution pattern constituting a diffusion region of the light distribution pattern for low beam PL. The diffusion region light distribution pattern PB is formed as a horizontally long light distribution pattern that spreads to the left of the main region light distribution pattern PA.

In the second lamp unit 30B, the projection lens 32B is formed in a toroidal lens shape extending obliquely toward the rear of the lamp toward the left end portion of the projection lens 32B, and the upward reflection surface 38Ba of the shade 38B is implemented by the horizontal plane including the optical axis Ax2. Therefore, in the diffusion region light distribution pattern PB, an upper end edge PBa of the diffusion region light distribution pattern PB extends in the horizontal direction at substantially the same height as the oncoming-traffic lane side cutoff line CL1. The upward reflection surface 38Ba of the shade 38B is formed to have a front-rear width smaller than that of the upward reflection surface 38Aa of the shade 38A. Therefore, the brightness of a region in the vicinity of the upper end edge PBa of the diffusion region light distribution pattern PB is lower than the brightness of the main region light distribution pattern PA.

The reflector 36B of the second lamp unit 30B has a reflection surface shape smaller than that of the reflector 36A of the first lamp unit 30A, and thus an accuracy of reflected light control decreases accordingly. However, in the diffusion region light distribution pattern PB, a dense light distribution such as the main region light distribution pattern PA is not required, and thus even though the reflection surface shape of the reflector 36B is made small, a required light distribution pattern can be formed.

The light distribution pattern for lateral illumination PC is a light distribution pattern formed by the light emitted from the light source 34A of the first lamp unit 30A, sequentially reflected by the first additional reflector 42 and the second additional reflector 44, and then emitted through the projection lens 32B of the second lamp unit 30B. The light that passes through the projection lens 32B of the second lamp unit 30B is emitted in the direction largely inclined leftward with respect to the front direction of the lamp (for example, a direction centered on a direction inclined by about 75° with respect to the front direction of the lamp).

The light distribution pattern for lateral illumination PC is formed as a slightly horizontally long light distribution pattern further extending in the left direction from a left end portion of the diffusion region light distribution pattern PB. The light distribution pattern for lateral illumination PC is formed as a light distribution pattern having a lower brightness than the diffusion region light distribution pattern PB, and extends above the upper end edge PBa of the diffusion region light distribution pattern PB. By forming the light distribution pattern for lateral illumination PC as described above, a visibility of the vehicle front traveling path at the time of left turn traveling or the like of the vehicle (for example, at the time of left curve traveling or left turn) is sufficiently ensured.

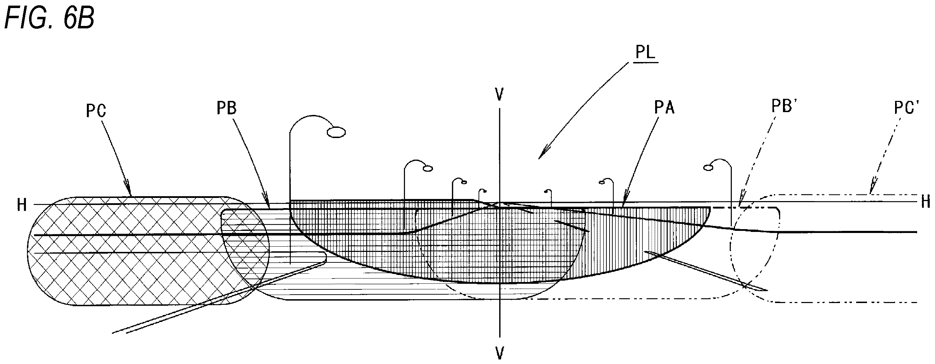

FIG. 6B is a diagram illustrating the light distribution pattern for low beam PL in phantom, illustrating the light distribution pattern for low beam PL over a wider range.

A diffusion region light distribution pattern PB' indicated by a two-dot chain line in FIG. 6B is a light distribution pattern formed by light emitted from another vehicle lamp. The other vehicle lamp is a vehicle lamp including a lamp unit assembly in which the arrangements of the first lamp unit 30A and the second lamp unit 30B are reversed left and right with respect to the lamp unit assembly 20, and is disposed at a right front end portion of the vehicle. The diffusion region light distribution pattern PB' is a light distribution pattern formed by light emitted from a second lamp unit of the other vehicle lamp. The diffusion region light distribution pattern PB' is formed as a light distribution pattern bilaterally symmetrical to the diffusion region light distribution pattern PB with respect to the line V-V. As described above, the pair of left and right diffusion region light distribution patterns PB and PB' partially overlap each other, and thus a wider light distribution pattern is formed in the entire vehicle.

Similarly, a light distribution pattern for lateral illumination PC' indicated by a two-dot chain line in FIG. 6B is a light distribution pattern formed by light emitted from the other vehicle lamp. The light distribution pattern for lateral illumination PC' is a light distribution pattern formed by light emitted from a first lamp unit of the other vehicle lamp. The light distribution pattern for lateral illumination PC' is formed in a light distribution pattern bilaterally symmetrical to the light distribution pattern for lateral illumination PC with respect to the line V-V. As described above, the pair of right and left light distribution pattern for lateral illuminations PC and PC' partially overlap with the pair of left and right diffusion region light distribution patterns PB and PB', the visibility of the vehicle front traveling path is sufficiently secured regardless of whether the entire vehicle turns in the left or right direction.

Next, operations and effects of the present embodiment will be described.

The vehicle lamp 10 according to the present embodiment includes the first lamp unit 30A which forms a main region of the light distribution pattern for low beam PL and the second lamp unit 30B which forms a diffusion region of the light distribution pattern for low beam PL. Therefore, it is possible to easily form the light distribution pattern for low beam PL with a light distribution suitable for the traveling of the vehicle.

In addition, the projection lens 32B of the second lamp unit 30B extends obliquely toward the rear of the lamp from the right end portion to the left end portion of the projection lens 32B (that is, from the end portion on the first lamp unit 30A side to the end portion on the opposite side thereof). In addition, the first lamp unit 30A includes the first additional reflector 42 and the second additional reflector 44 that sequentially reflect the light emitted from the light source 34A toward the projection lens 32B of the second lamp unit 30B. Further, the second additional reflector 44 is disposed on the right of the light source 34A of the first lamp unit 30A (that is, on the side opposite to the second lamp unit 30B). Therefore, the present embodiment can exert the following operations and effects.

That is, the light emitted from the light source 34A of the first lamp unit 30A and then sequentially reflected by the first additional reflector 42 and the second additional reflector 44 is emitted toward the front of the lamp through the projection lens 32B of the second lamp unit 30B inclined toward the rear of the lamp. The emitted light is a lateral emission light directed in the direction largely inclined leftward from the front direction of the lamp.

Therefore, the light distribution pattern for low beam PL formed by the light emitted from the entire vehicle lamp 10 includes, in addition to the main region light distribution pattern PA and the diffusion region light distribution pattern PB, the light distribution pattern for lateral illumination PC formed by the lateral emission light. The main region light distribution pattern PA and the diffusion region light distribution pattern PB are original light distribution patterns which are formed by light emitted from the light sources 34A and 34B in the first lamp unit 30A and the second lamp unit 30B and emitted to the front of the lamp through the reflectors 36A and 36B and the projection lenses 32A and 32B. In addition to such original light distribution patterns, the light distribution pattern for lateral illumination PC is formed, and thus a lateral illumination angle in the vehicle front traveling path is sufficiently secured.

As described above, according to the present embodiment, the vehicle lamp 10 including the first lamp unit 30A and the second lamp unit 30B arranged side by side in the left-right direction can sufficiently secure the lateral illumination angle in the vehicle front traveling path.

In the present embodiment, the first additional reflector 42 reflects the light emitted from the light source 34A of the first lamp unit 30A as convergent light toward the second additional reflector 44. Therefore, the reflection surface shape of the second additional reflector 44 can be made small, and thus a degree of freedom in the arrangement of the second additional reflector 44 can be increased.

In the present embodiment, the reflector 36A, the first additional reflector 42, and the second additional reflector 44 of the first lamp unit 30A, and the reflector 36B of the second lamp unit 30B are integrally formed. Therefore, the number of components of the vehicle lamp 10 can be reduced.

In the present embodiment, the projection lens 32B of the second lamp unit 30B is formed in a toroidal lens shape. Therefore, the light distribution pattern for lateral illumination PC can be formed with a substantially constant up-down width and substantially uniform brightness.

In the present embodiment, the projection lens 32A of the first lamp unit 30A and the projection lens 32B of the second lamp unit 30B are integrally formed. Therefore, it is possible to easily cause the light emitted from the light source 34A of the first lamp unit 30A and then sequentially reflected by the first additional reflector 42 and the second additional reflector 44 to incident on the projection lens 32B of the second lamp unit 30B. In addition, the number of components of the vehicle lamp 10 can be further reduced.

In the present embodiment, the projection lens 32B of the second lamp unit 30B extends obliquely toward the rear of the lamp from the right end portion to the left end portion of the projection lens 32B (that is, from the end portion on the first lamp unit 30A (located inside in the vehicle width direction) side to the end portion on the opposite side thereof). Therefore, it is easy to design the vehicle lamp 10 along a vehicle body shape.

In the present embodiment, the light source 34B of the second lamp unit 30B is disposed on the front of the lamp with respect to the light source 34A of the first lamp unit 30A. Further, the reflector 36B of the second lamp unit 30B is disposed on the front of the lamp with respect to the reflector 36A of the first lamp unit 30A in the positional relation in which the reflector 36B of the second lamp unit 30B partially overlaps with the reflector 36A of the first lamp unit 30A in the front view of the lamp. Therefore, a left-right width of the lamp unit assembly 20 can be reduced, and thus the vehicle lamp 10 can be miniaturized.

In the present embodiment, the light distribution pattern for low beam PL is a light distribution pattern obtained by adding the light distribution pattern for lateral illumination PC to the main region light distribution pattern PA and the diffusion region light distribution pattern PB. Therefore, it is possible to easily capture an image of the vehicle front traveling path over a wide range by an in-vehicle camera or the like.

In the present embodiment, it has been described that the first additional reflector 42 reflects the light emitted from the light source 34A of the first lamp unit 30A as the convergent light toward the second additional reflector 44. However, the first additional reflector 42 may reflect the light emitted from the light source 34A as parallel light or diffused light toward the second additional reflector 44.

In the present embodiment, it has been described that the reflection surface 44a of the second additional reflector 44 is implemented by a single curved surface. However, the reflection surface 44a may include a plurality of reflective elements.

In the present embodiment, the reflector 36B of the second lamp unit 30B reflects the light emitted from the light source 34B as the light converging in the left-right direction. However, the reflector 36B may reflect the light emitted from the light source 34B as light spreading in the left-right direction or the parallel light.

In the present embodiment, the second lamp unit 30B is disposed on the left of the first lamp unit 30A in the lamp unit assembly 20. However, when the second lamp unit 30B is disposed on the right of the first lamp unit 30A, it is also possible to obtain the same operations and effects as those of the present embodiment. When such a configuration is adopted, the lamp unit assembly can be made suitable for a vehicle lamp disposed at the right front end portion of the vehicle.

### Modification of First Embodiment

Next, a modification of the first embodiment will be described.

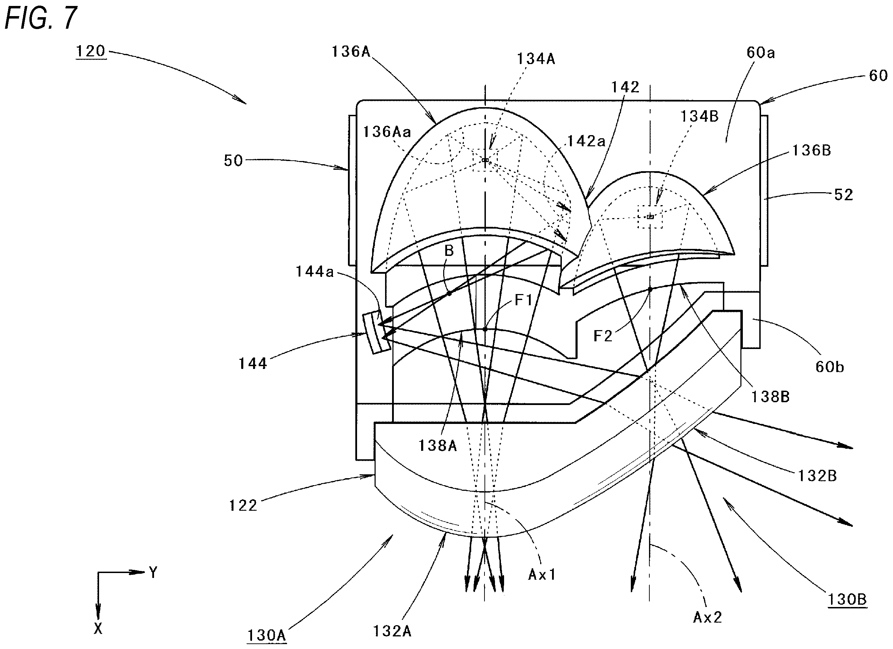

FIG. 7 is a plan view illustrating a lamp unit assembly 120 of a vehicle lamp according to the present modification.

As illustrated in FIG. 7, the lamp unit assembly 120 according to the present modification is also a lamp unit assembly of the vehicle lamp disposed at a left front end portion of a vehicle. However, a configuration of a first lamp unit 130A of the lamp unit assembly 120 is partially different from that of the first embodiment.

That is, a second lamp unit 130B includes a projection lens 132B, a light source 134B, a reflector 136B, and a shade 138B similar to the second lamp unit 30B of the first embodiment.

On the other hand, the first lamp unit 130A also includes a projection lens 132A, a light source 134A, a reflector 136A, and a shade 138A similar to the first lamp unit 30A of the first embodiment. However, the configurations of the first additional reflector 142 and the second additional reflector 144 that sequentially reflect the light emitted from the light source 134A toward the projection lens 132B of the second lamp unit 130B are different from those of the first embodiment.

That is, in the present modification, the first additional reflector 142 is disposed on the rear of the lamp with respect to the reflector 136B of the second lamp unit 130B. Accordingly, the arrangement of the second additional reflector 144 is different from that of the first embodiment.

Specifically, in the present modification, the light source 134B of the second lamp unit 130B also is disposed on the front of the lamp with respect to the light source 134A of the first lamp unit 130A. In addition, the reflector 136B of the second lamp unit 130B is disposed on the front of the lamp with respect to the reflector 136A in a positional relation in which the reflector 136B partially overlaps with the reflector 136A of the first lamp unit 130A in a front view of the lamp, and is formed integrally with the reflector 136A.

Therefore, in the present modification, a left end portion of a reflection surface 136Aa of the reflector 136A of the first lamp unit 130A is also partially lost. However, in the present modification, a reflection surface 142a of the first additional reflector 142 is formed at a portion of the left end portion, which is located on a rear surface of the reflector 136B. The reflection surface 142a has a light emitting center of the light source 134A as a first focal point. Further, the reflection surface 142a is implemented by a curved surface close to an ellipsoid, with a point B located to the right of and above the optical axis Ax1 between the first additional reflector 142 and the projection lens 132A as a second focal point.

In the present modification, the second additional reflector 144 is also formed integrally with the holder 60 so as to extend upward from the horizontal flange portion 60a of the holder 60 in the vicinity of the right of the shade 138A. However, the formation position of the second additional reflector 144 is displaced toward the rear of the lamp than that in the first embodiment. The second additional reflector 144 reflects the light emitted from the light source 134A and reflected by the first additional reflector 142 in a direction largely inclined leftward with respect to a front direction of the lamp, and causes the reflected light to incident on the projection lens 132B of the second lamp unit 130B.

A reflection surface 144a of the second additional reflector 144 is implemented by a curved surface close to a paraboloid with the point B as a focal point. Accordingly, the reflection surface 144a reflects the reflected light from the first additional reflector 142 as light slightly spreading in an up-down direction and a left-right direction.

In the present modification, light emitted from the light source 134A of the first lamp unit 130A, sequentially reflected by the first additional reflector 142 and the second additional reflector 144, and then emitted toward the front of the lamp through the projection lens 132B also is lateral emission light directed in a direction largely inclined leftward from the front direction of the lamp. Therefore, similar to the first embodiment, in the present modification, it is also possible to sufficiently secure a lateral illumination angle in a vehicle front traveling path.

In the present modification, the lamp unit assembly 120 can be simplified in configuration while a left-right width of the lamp unit assembly 120 is reduced.

### Second Embodiment

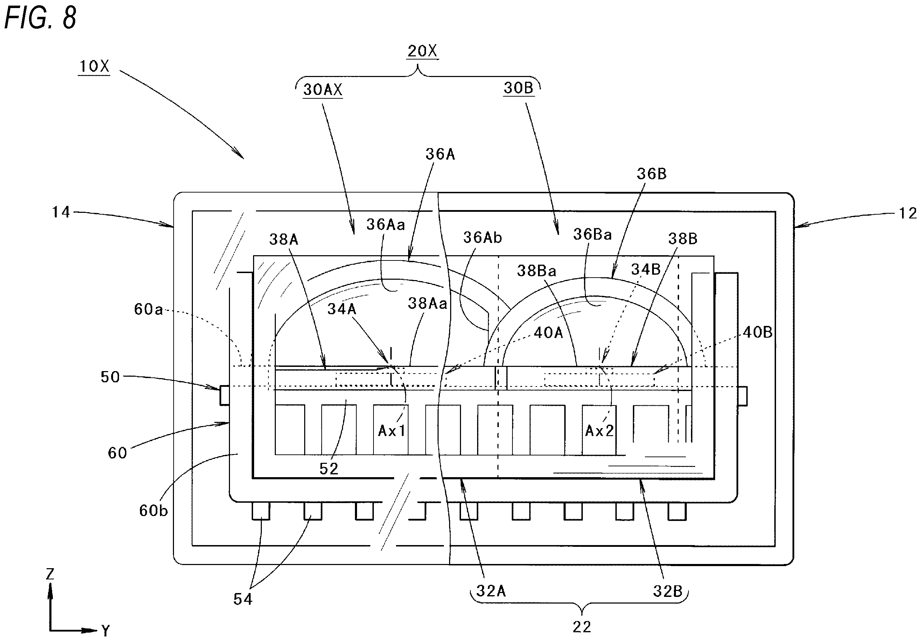

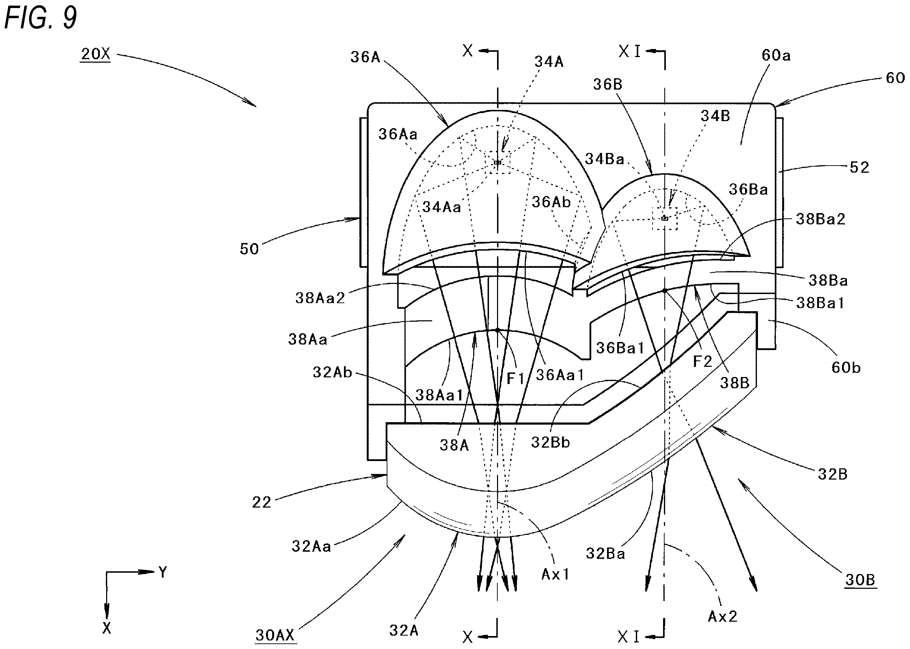

FIG. 8 is a front view illustrating a vehicle lamp 10X according to a second embodiment of the present disclosure. In the configuration illustrated in FIG. 8, the same components as those illustrated in FIG. 1 are denoted by the same reference numerals, and the description thereof is omitted. FIG. 9 is a plan view illustrating a lamp unit assembly 20X of the vehicle lamp 10X. In the configuration illustrated in FIG. 9, the same components as those illustrated in FIG. 2 are denoted by the same reference numerals, and the description thereof is omitted.

As illustrated in FIGS. 8 and 9, the lamp unit assembly 20X according to the second embodiment is also a lamp unit assembly of the vehicle lamp disposed at a left front end portion of a vehicle. However, a configuration of a first lamp unit 30AX of the lamp unit assembly 20X according to the second embodiment is partially different from the configuration of the first lamp unit 30A according to the first embodiment.

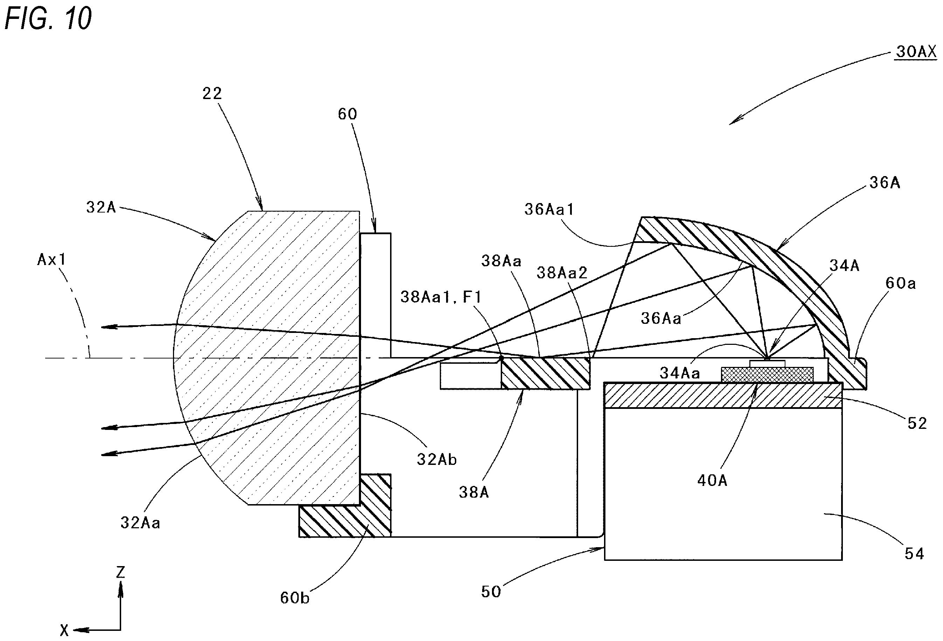

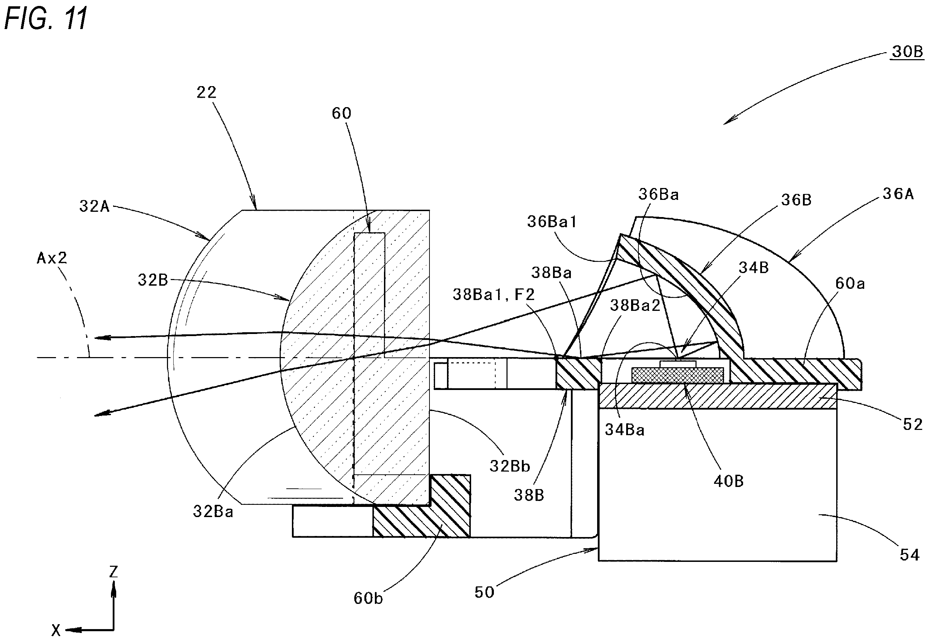

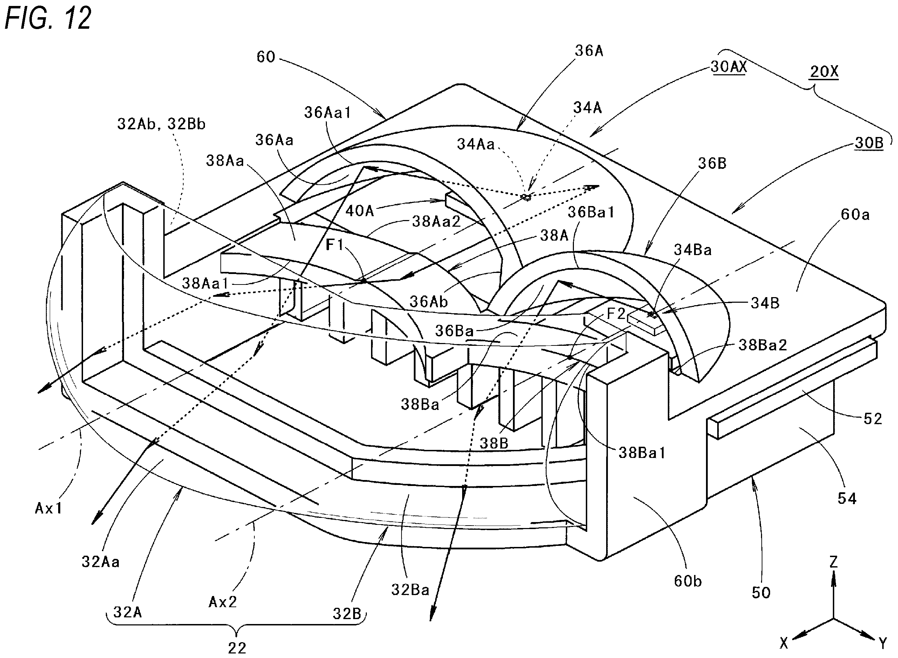

FIG. 10 is a cross-sectional view taken along a line X-X in FIG. 9. In the configuration illustrated in FIG. 10, the same components as those illustrated in FIG. 3 are denoted by the same reference numerals, and the description thereof is omitted. FIG. 11 is a cross-sectional view taken along a line XI-XI in FIG. 9. In the configuration illustrated in FIG. 11, the same components as those illustrated in FIG. 4 are denoted by the same reference numerals, and the description thereof is omitted. FIG. 12 is a perspective view illustrating the lamp unit assembly 20X. In the configuration illustrated in FIG. 12, the same components as those illustrated in FIG. 5 are denoted by the same reference numerals, and the description thereof is omitted.

The first lamp unit 30A of the first embodiment includes the first additional reflector 42 and the second additional reflector 44. On the other hand, in the second embodiment, as illustrated in FIGS. 8 to 12, the first lamp unit 30AX does not include these additional reflectors.

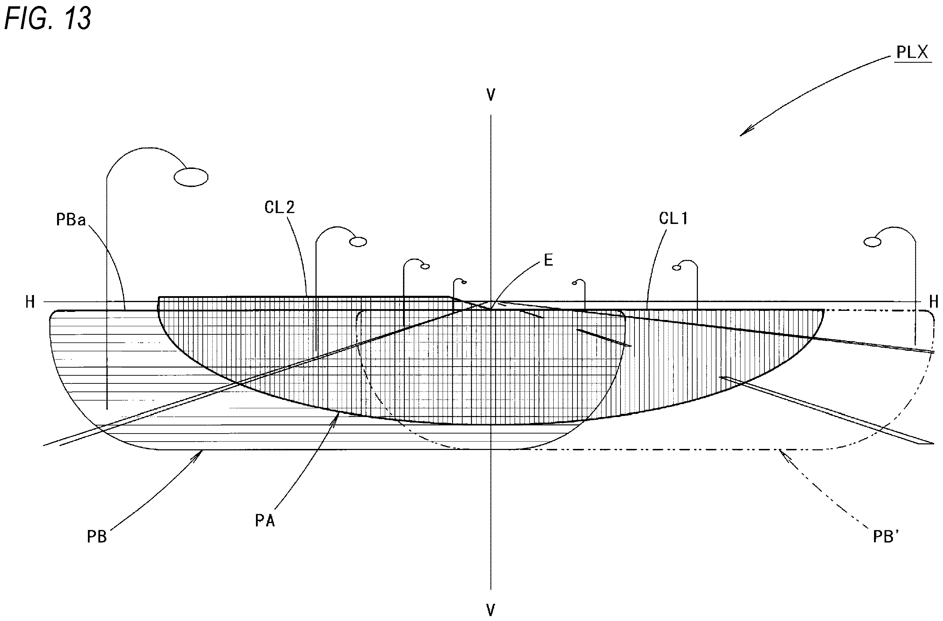

FIG. 13 is a diagram illustrating a light distribution pattern for low beam PLX formed by light emitted from the vehicle lamp 10X in phantom. In the configuration illustrated in FIG. 13, the same components as those illustrated in FIG. 6 are denoted by the same reference numerals, and the description thereof is omitted.

As illustrated in FIG. 13, the light distribution pattern for low beam PLX according to the second embodiment includes only the main region light distribution pattern PA and the diffusion region light distribution pattern PB, and does not include the light distribution pattern for lateral illumination. The first lamp unit 30AX of the second embodiment does not include an additional reflector, and thus no light distribution pattern for lateral illumination is formed.

Next, operations and effects of the second embodiment will be described.

The reflector 36A of the first lamp unit 30AX reflects the light emitted from the light source 34A of the first lamp unit 30AX as the light converging in the left-right direction. The light source 34B of the second lamp unit 30B is disposed on the front of the lamp with respect to the light source 34A of the first lamp unit 30AX. The reflector 36B of the second lamp unit 30B is disposed on the front of the lamp with respect to the reflector 36A in the positional relation in which the reflector 36B of the second lamp unit 30B partially overlaps with the reflector 36A of the first lamp unit 30AX in the front view of the lamp. Therefore, the present embodiment can exert the following operations and effects.

That is, the reflector 36A of the first lamp unit 30AX reflects the light emitted from the light source 34A of the first lamp unit 30AX as the light converging in the left-right direction. Therefore, although the reflector 36A is disposed on the rear of the lamp in a positional relation in which the reflector 36A partially overlaps with the reflector 36B of the second lamp unit 30B in the front view of the lamp, the reflected light is hardly shielded by the reflector 36B of the second lamp unit 30B. In this manner, the reflector 36A may cause the reflected light to incident on the projection lens 32A of the first lamp unit 30AX without being substantially shielded by the reflector 36B.

Accordingly, the first lamp unit 30AX may enlarge a reflection surface shape of the reflector 36A, and cause a larger amount of light emitted from the light source 34A to incident on the projection lens 32A.

The reflector 36B of the second lamp unit 30B is disposed on the front of the lamp with respect to the reflector 36A of the first lamp unit 30AX, and the reflected light of the reflector 36B of the second lamp unit 30B is not shielded by the reflector 36A. Therefore, it is possible to easily enlarge a reflection surface shape of the reflector 36B of the second lamp unit 30B.

Therefore, it is possible to increase a luminous flux utilization rate of the vehicle lamp 10X while avoiding the interference between the reflectors 36A and 36B of the first lamp unit 30AX and the second lamp unit 30B in advance.

In addition, the reflectors 36A and 36B of the first lamp unit 30AX and the second lamp unit 30B are arranged in the partially overlapping positional relation in the front view of the lamp. Therefore, a left-right width of the vehicle lamp 10X can be reduced, and thus the vehicle lamp 10X can be miniaturized.

As described above, according to the present embodiment, the vehicle lamp 10X including the first lamp unit 30AX and the second lamp unit 30B arranged side by side in the left-right direction can increase the luminous flux utilization rate while maintaining the miniaturization of the lamp.

In the present embodiment, the reflection surface of the reflector 36B of the second lamp unit 30B is smaller than the reflection surface of the reflector 36A of the first lamp unit 30AX. Therefore, although the reflectors 36A and 36B of the first lamp unit 30AX and the second lamp unit 30B are arranged in the partially overlapping positional relation in the front view of the lamp, a front-rear width of the vehicle lamp 10X can be prevented from becoming large.

In the present embodiment, the reflector 36A of the first lamp unit 30AX and the reflector 36B of the second lamp unit 30B are integrally formed, and thus the number of components of the vehicle lamp 10X can be reduced.

In the present embodiment, the projection lens 32B of the second lamp unit 30B extends obliquely toward the rear of the lamp from the right end portion to the left end portion of the projection lens 32B (that is, from an end portion on a first lamp unit 30AX (located inside in a vehicle width direction) side to an end portion on an opposite side thereof). Therefore, it is easy to design the vehicle lamp 10X along a vehicle body shape.

In the present embodiment, the projection lens 32A of the first lamp unit 30AX and the projection lens 32B of the second lamp unit 30B are integrally formed as the projection lens assembly 22. Therefore, the number of components of the vehicle lamp 10X can be further reduced.

In the present embodiment, the first lamp unit 30AX and the second lamp unit 30B shield a part of the light emitted from the light sources 34A and 34B and reflected by the reflectors 36A and 36B by the shades 38A and 38B arranged between the reflectors 36A and 36B and the projection lenses 32A and 32B to form the cutoff lines CL1 and CL2 of the light distribution pattern for low beam PLX. The shades 38A and 38B have the upward reflection surfaces 38Aa and 38Ba that reflect the reflected light from the reflectors 36A and 36B upward toward the projection lenses 32A and 32B, and thus the luminous flux utilization rate of the light emitted from the light sources 34A and 34B can be increased.

The second lamp unit 30B forms a diffusion region of the light distribution pattern for low beam PLX. Therefore, the diffusion region light distribution pattern PB can be formed with a required light distribution even though the width of the upward reflection surface 38Ba of the shade 38B in the front-rear direction of the lamp is reduced. Therefore, as in the present embodiment, even though the reflector 36B and the shade 38B are integrally formed in the second lamp unit 30B, the molding can be easily performed.

In the second lamp unit 30B, the front end edge 36Ba1 of the reflection surface 36Ba of the reflector 36B extends obliquely toward the rear of the lamp from a right end portion to a left end portion of the front end edge 36Ba1. In addition, the upward reflection surface 38Ba of the shade 38B also extends obliquely toward the rear of the lamp from a right end portion to a left end portion of the upward reflection surface 38Ba. Therefore, although the projection lens 32B extends obliquely toward the rear of the lamp from the right end portion to the left end portion of the projection lens 32B, it is possible to easily secure a required light distribution function.

In the present embodiment, it has been described that the front end edge 38Aa1 and the rear end edge 38Aa2 of the upward reflection surface 38Aa in the shade 38A of the first lamp unit 30AX extends toward both left and right sides in a curved manner toward the front of the lamp. However, the front end edge 38Aa1 and the rear end edge 38Aa2 may extend linearly toward both left and right sides.

In the present embodiment, it has been described that the front end edge 38Ba1 and the rear end edge 38Ba2 of the upward reflection surface 38Ba of the shade 38B of the second lamp unit 30B extends obliquely toward the rear of the lamp from the right end portion to the left end portion. However, the front end edge 38Ba1 and the rear end edge 38Ba2 may extend linearly toward both the left and right sides.

In the present embodiment, another second lamp unit having a configuration bilaterally symmetrical to the second lamp unit 30B may be additionally disposed on the right of the first lamp unit 30AX. Accordingly, it is also possible to form the main region light distribution pattern and the pair of left and right diffusion region light distribution patterns as the light distribution pattern for low beam.

### Modification of Second Embodiment

Next, a modification of the second embodiment will be described.

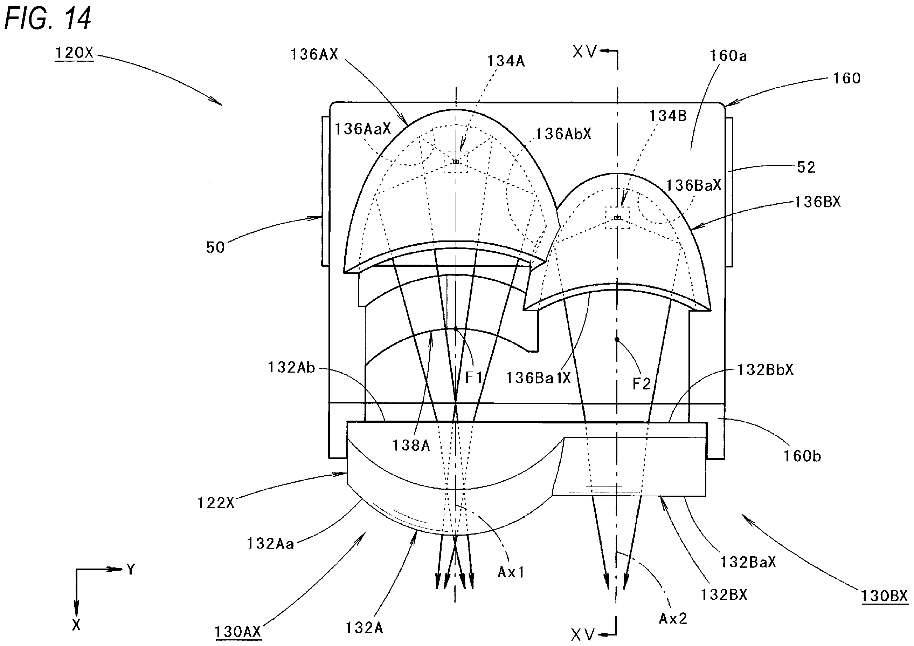

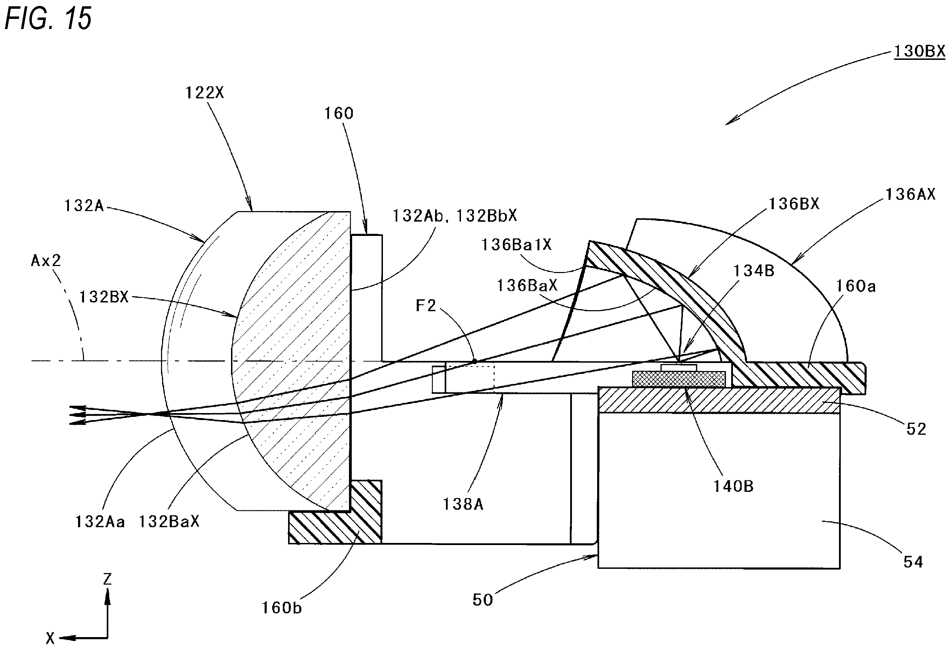

FIG. 14 is a plan view illustrating a lamp unit assembly 120X of a vehicle lamp according to the present modification. FIG. 15 is a cross-sectional view taken along a line XV-XV in FIG. 14.

As illustrated in FIGS. 14 and 15, the lamp unit assembly 120X according to the present modification is also a lamp unit assembly of the vehicle lamp disposed at a left front end portion of a vehicle. However, the lamp unit assembly 120X forms a light distribution pattern for low beam by light emitted from a first lamp unit 130AX, and forms a light distribution pattern for high beam by adding light emitted from a second lamp unit 130BX. The modification is different from the second embodiment in that the light distribution pattern for high beam is formed.

In the lamp unit assembly 120X according to the present modification, the configuration of the first lamp unit 130AX is substantially the same as the configuration of the first lamp unit 30AX of the second embodiment, and the configuration of the second lamp unit 130BX is partially different from the configuration of the second lamp unit 30B of the

### second embodiment.

That is, the first lamp unit 130AX includes the projection lens 132A, the light source 134A, the reflector 136AX, and the shade 138A similar to the first lamp unit 30AX of the second embodiment.

On the other hand, the present modification is the same as the second embodiment in that the second lamp unit 130BX includes the light source 134B, a reflector 136BX, and a projection lens 132BX. However, the second lamp unit 130BX of the present modification does not include the shade 38B as in the second lamp unit 30B of the second embodiment. The configurations of the reflector 136BX and the projection lens 132BX are different from those of the reflector 36B and the projection lens 32B of the second embodiment.

In the present modification, the projection lens 132A of the first lamp unit 130AX and the projection lens 132BX of the second lamp unit 130BX are also integrally formed as a projection lens assembly 122X.

At this time, the projection lens 132A of the first lamp unit 130AX has the same configuration as the projection lens 32A of the first lamp unit 30AX of the second embodiment.

On the other hand, the projection lens 132BX of the second lamp unit 130BX is implemented as a cylindrical lens extending in the left-right direction, and has the same up-down width as the projection lens 132A of the first lamp unit 130AX. A rear surface 132BbX of the projection lens 132BX is flush with a rear surface 132Ab of the projection lens 132A. A front surface 132BaX of the projection lens 132BX is located on the rear of the lamp with respect to a front surface 132Aa of the projection lens 132A. At this time, a curvature of the front surface 132BaX of the projection lens 132BX is set such that the rear focal point F2 in a vertical cross section including the optical axis Ax2 as an axis line extending in the front-rear direction of the lamp so as to pass through a light emitting center of the light source 134B is slightly located on the front of the lamp with respect to the rear focal point F1 of the projection lens 132A.

Similar to the reflector 136AX of the first lamp unit 130AX, the reflector 136BX of the second lamp unit 130BX covers the light source 134B from the above, and causes the light emitted from the light source 134B to incident on the projection lens 132BX as light converging in the left-right direction. A reflection surface 136BaX of the reflector 136BX is also implemented by a curved surface having a substantially elliptical surface shape with the light emitting center of the light source 134B as a first focal point. The reflection surface 136BaX is smaller than a reflection surface 136AaX of the reflector 136AX.

The reflection surface 136BaX of the reflector 136BX has a bilaterally symmetrical shape with respect to the optical axis Ax2. Further, a front end edge 136Ba1X of the reflection surface 136BaX is located on the front of the lamp with respect to the front end edge 36Ba1 of the reflection surface 36Ba in the reflector 36B of the second embodiment.

In the present modification, the reflector 136BX is also disposed on the front of the lamp with respect to the reflector 136AX in a positional relation in which the reflector 136BX partially overlaps with the reflector 136AX of the first lamp unit 130AX in the front view of the lamp, and is formed integrally with the reflector 136AX. Therefore, similar to the second embodiment, a left end portion of the reflection surface 136AaX of the reflector 136AX is partially lost, and the lost portion is provided with a standing wall portion 136AbX that extends in a substantially vertical plane along an outer peripheral edge shape of the reflector 136BX.

In the lamp unit assembly 120X of the present modification, the reflectors 136AX and 136BX of the first lamp unit 130AX and the second lamp unit 130BX, the shade 138A of the first lamp unit 130AX, and a holder 160 including a horizontal flange portion 160a and a frame portion 160b are also integrally formed.

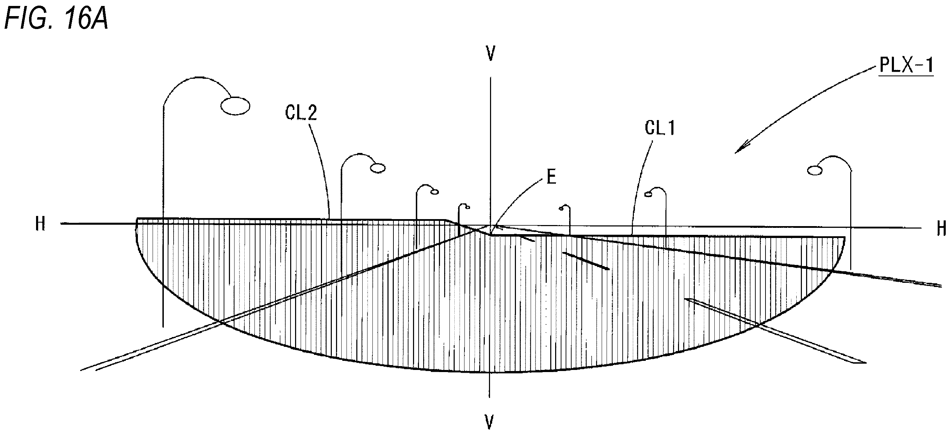

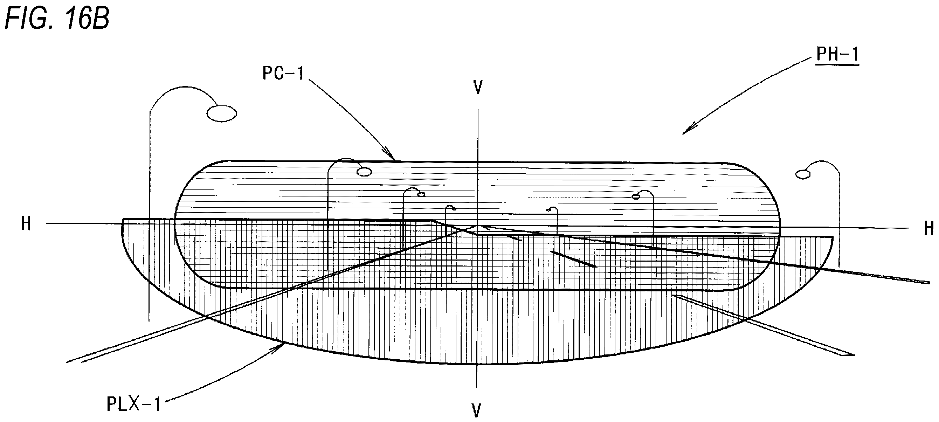

FIGS. 16A and 16B are diagrams illustrating a light distribution pattern for low beam PLX-1 and a light distribution pattern for high beam PH-1 formed by the light emitted from the vehicle lamp according to the present modification in phantom.

As illustrated in FIG. 16A, the light distribution pattern for low beam PLX-1 is the same light distribution pattern as the main region light distribution pattern PA in the light distribution pattern for low beam PLX illustrated in FIG. 13, and is formed by the light emitted from the first lamp unit 130AX.

As illustrated in FIG. 16B, the light distribution pattern for high beam PH-1 is a light distribution pattern obtained by adding an additional light distribution pattern PC-1 formed by the light emitted from the second lamp unit 130BX to the light distribution pattern for low beam PLX-1.

The additional light distribution pattern PC-1 is a horizontally long light distribution pattern centered around the H-V, and straddles the cutoff lines CL1 and CL2 of the light distribution pattern for low beam PLX-1 upward and downward. This is because the second lamp unit 130BX does not include the shade 38B as in the second lamp unit 30B of the second embodiment, and thus the light emitted from the light source 134B and reflected by the reflector 136BX is emitted from the projection lens 132BX toward the front of the lamp as light spreading to both upper and lower sides.

In the present modification, the reflector 136AX of the first lamp unit 130AX also reflects the light emitted from the light source 134A as the light converging in the left-right direction. Therefore, although the reflector 136AX of the first lamp unit 130AX is disposed on the rear of the lamp in a positional relation in which the reflector 136AX of the first lamp unit 130AX partially overlaps with the reflector 136BX of the second lamp unit 130BX in the front view of the lamp, the reflected light is hardly shielded by the reflector 136BX of the second lamp unit 130BX. In this manner, the reflector 136AX may cause the reflected light to incident on the projection lens 132A of the first lamp unit 130AX without being substantially shielded by the reflector 136BX.

Accordingly, the first lamp unit 130AX may enlarge a reflection surface shape of the reflector 136AX, and cause a larger amount of light emitted from the light source 34A to incident on the projection lens 132A.

The reflector 136BX of the second lamp unit 130BX is disposed on the front of the lamp with respect to the reflector 136AX of the first lamp unit 130AX, and the reflected light is not shielded by the reflector 136AX, and thus the reflection surface shape may be easily enlarged.

Therefore, it is possible to increase a luminous flux utilization rate of the vehicle lamp while avoiding the interference between the reflectors 136AX and 136BX of the first lamp unit 130AX and the second lamp unit 130BX in advance.

In the present modification, the reflectors 136AX and 136BX of the first lamp unit 130AX and the second lamp unit 130BX are also arranged in the partially overlapping positional relation in the front view of the lamp. Therefore, a left-right width of the lamp unit assembly 120X can be reduced, and thus the vehicle lamp can be miniaturized.

In the present modification, the reflector 136BX of the second lamp unit 130BX also has a reflection surface shape smaller than that of the reflector 136AX of the first lamp unit 130AX. Therefore, although the reflector 136AX and the reflector 136BX are arranged in the partially overlapping positional relation in the front view of the lamp, a front-rear width of the vehicle lamp can be prevented from becoming large.

### Third Embodiment

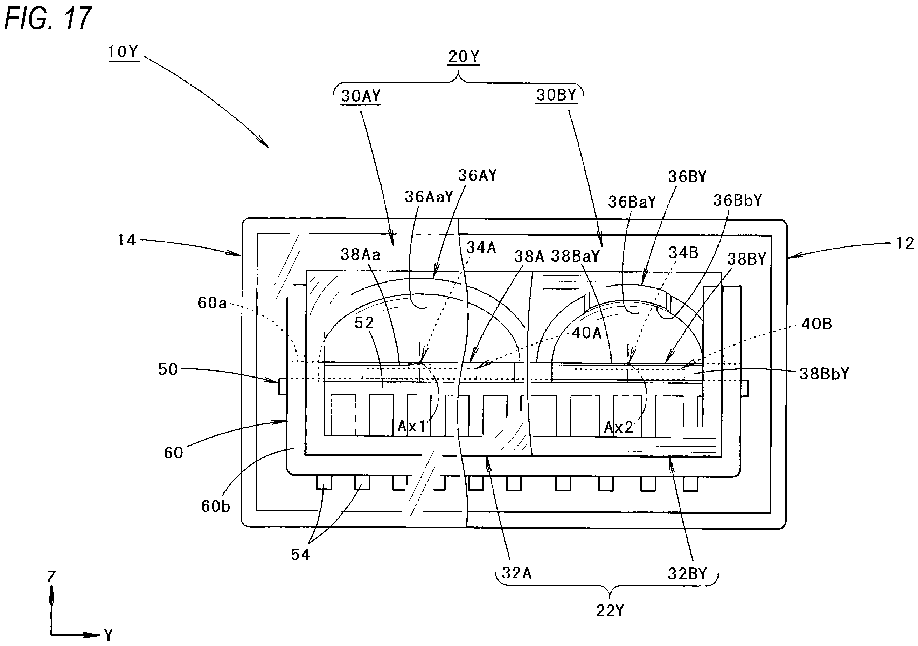

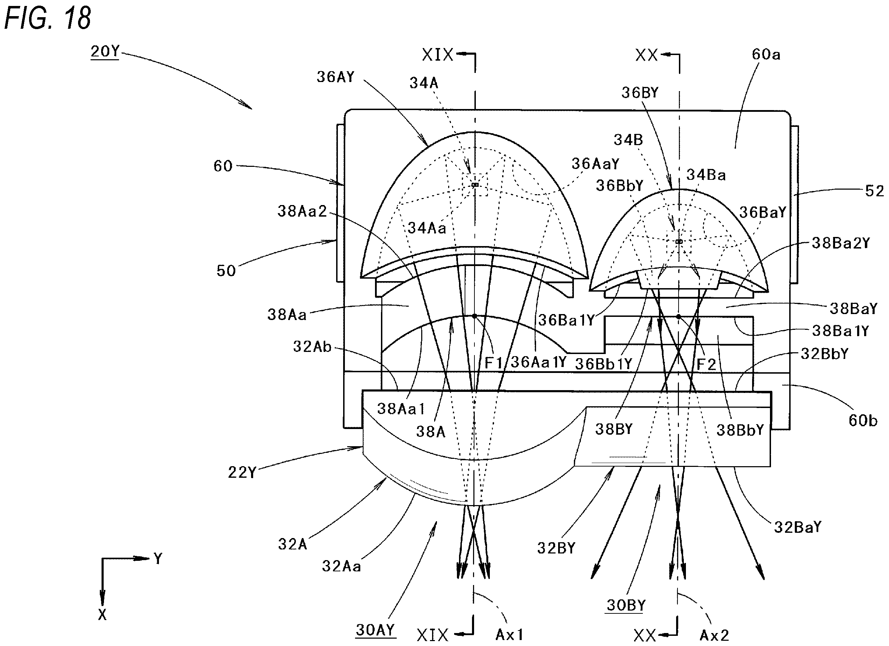

FIG. 17 is a front view illustrating a vehicle lamp 10Y according to a third embodiment of the present disclosure. In the configuration illustrated in FIG. 17, the same components as those illustrated in FIG. 1 are denoted by the same reference numerals, and the description thereof is omitted. FIG. 18 is a plan view illustrating a lamp unit assembly 20Y of the vehicle lamp 10Y. In the configuration illustrated in FIG. 18, the same components as those illustrated in FIG. 2 are denoted by the same reference numerals, and the description thereof is omitted.

As illustrated in FIGS. 17 and 18, the lamp unit assembly 20Y according to the third embodiment is also a lamp unit assembly of the vehicle lamp disposed at a left front end portion of a vehicle. However, a configuration of a first lamp unit 30AY of the lamp unit assembly 20Y according to the third embodiment is partially different from the configuration of the first lamp unit 30A according to the first embodiment. However, a configuration of a second lamp unit 30BY of the lamp unit assembly 20Y according to the third embodiment is partially different from the configuration of the second lamp unit 30B according to the first embodiment.

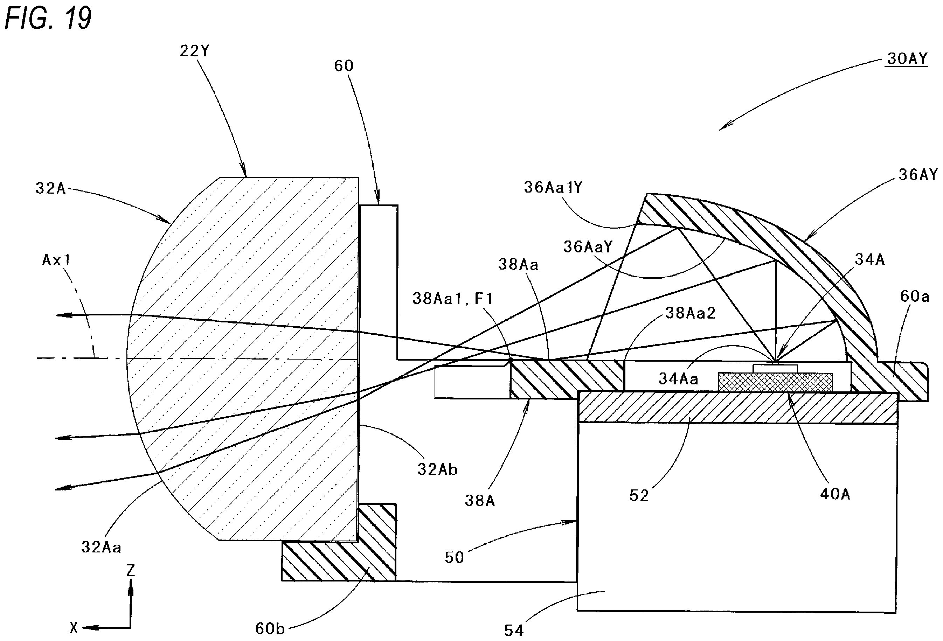

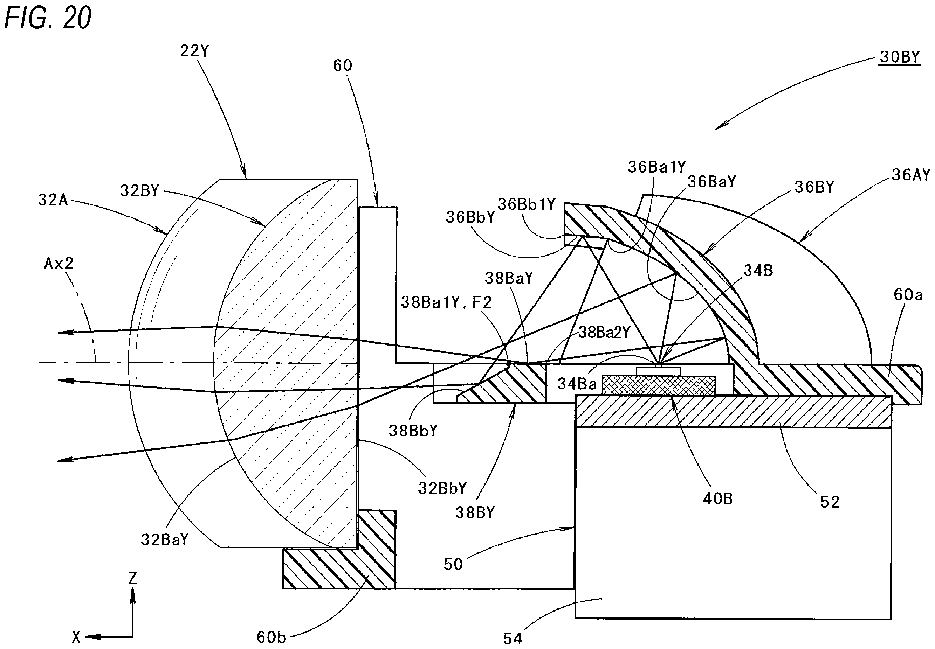

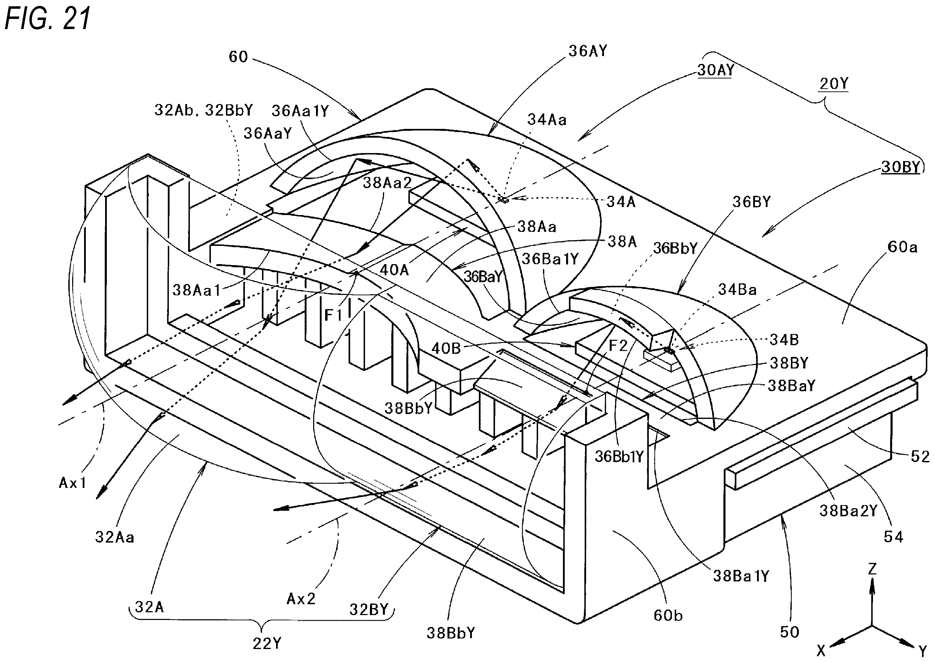

FIG. 19 is a cross-sectional view taken along a line XIX-XIX in FIG. 18. In the configuration illustrated in FIG. 19, the same components as those illustrated in FIG. 3 are denoted by the same reference numerals, and the description thereof is omitted. FIG. 20 is a cross-sectional view taken along a line XX-XX in FIG. 18. In the configuration illustrated in FIG. 20, the same components as those illustrated in FIG. 4 are denoted by the same reference numerals, and the description thereof is omitted. FIG. 21 is a perspective view illustrating the lamp unit assembly 20Y. In the configuration illustrated in FIG. 21, the same components as those illustrated in FIG. 5 are denoted by the same reference numerals, and the description thereof is omitted.

The first lamp unit 30A of the first embodiment includes the first additional reflector 42 and the second additional reflector 44. On the other hand, in the third embodiment, as illustrated in FIGS. 17 to 21, the first lamp unit 30AY does not include these additional reflectors. Further, the reflectors 36A and 36B of the first embodiment are arranged in the partially overlapping positional relation in the front view of the lamp. On the other hand, in the third embodiment, reflectors 36AY and 36BY are arranged in a non-overlapping positional relation in a front view of the lamp.

Further, as illustrated in FIGS. 20 and 21, a projection lens 32BY, a reflector 36BY, and a shade 38BY of the second lamp unit 30BY according to the third embodiment are different from the projection lens 32B, the reflector 36B, and the shade 38B of the second lamp unit 30B according to the first embodiment.

That is, the projection lens 32BY of the third embodiment is implemented by a cylindrical lens extending in a left-right direction. Further, the projection lens 32BY has the same up-down width as the projection lens 32A of the first lamp unit 30AY. A rear surface 32BbY of the projection lens 32BY is flush with the rear surface 32Ab of the projection lens 32A. A front surface 32BaY of the projection lens 32BY is located on the rear of the lamp with respect to the front surface 32Aa of the projection lens 32A. Specifically, a curvature of the front surface 32BaY of the projection lens 32BY is set such that the rear focal point F2 in a vertical cross section including the optical axis Ax2 as an axis line extending in a front-rear direction of the lamp so as to pass through the light emitting center of the light source 34B is located at approximately the same position as the rear focal point F1 of the projection lens 32A in the front-rear direction of the lamp.

The shade 38BY has an upward reflection surface 38BaY that shields a part of the reflected light from the reflector 36BY and reflects a part of the reflected light upward toward the projection lens 32BY. The configuration of the upward reflection surface 38BaY is different from the configuration of the upward reflection surface 38Ba according to the first embodiment.

That is, the upward reflection surface 38BaY of the shade 38BY is implemented by a horizontal plane including the optical axis Ax2. A front end edge 38Ba1Y of the upward reflection surface 38BaY extends linearly from the rear focal point F2 of the projection lens 32BY toward both left and right sides. The upward reflection surface 38BaY is set to have a smaller width in the front-rear direction of the lamp than the upward reflection surface 38Aa of the shade 38A (specifically, a value equal to or smaller than 1/2). A rear end edge 38Ba2Y of the upward reflection surface 38BaY extends linearly in the left-right direction in the front of the lamp with respect to a front end edge 36Ba1Y of a reflection surface 36BaY of the reflector 36BY.

A front end portion of the reflector 36BY is provided with a first additional reflection surface 36BbY that reflects the light emitted from the light source 34B toward a front end portion of the upward reflection surface 38BaY of the shade 38BY. A front end edge 36Bb1Y of the first additional reflection surface 36BbY is located on the rear of the lamp with respect to the rear end edge 38Ba2Y of the upward reflection surface 38BaY of the shade 38BY. Accordingly, the shade 38BY and the reflector 36BY do not overlap each other in a plan view.

A second additional reflection surface 38BbY that reflects the light emitted from the light source 34B and reflected by the first additional reflection surface 36BbY of the reflector 36BY toward the projection lens 32BY is formed at a position in the front of and below the lamp with respect to the upward reflection surface 38BaY of the shade 38BY. The second additional reflection surface 38BbY is an inclined surface extending obliquely downward toward the front of the lamp from a position near the lower side of the front end edge 38Ba1Y of the upward reflection surface 38BaY. Further, the second additional reflection surface 38BbY extends in a planar shape in the left-right direction along the front end edge 38Ba1Y of the upward reflection surface 38BaY.

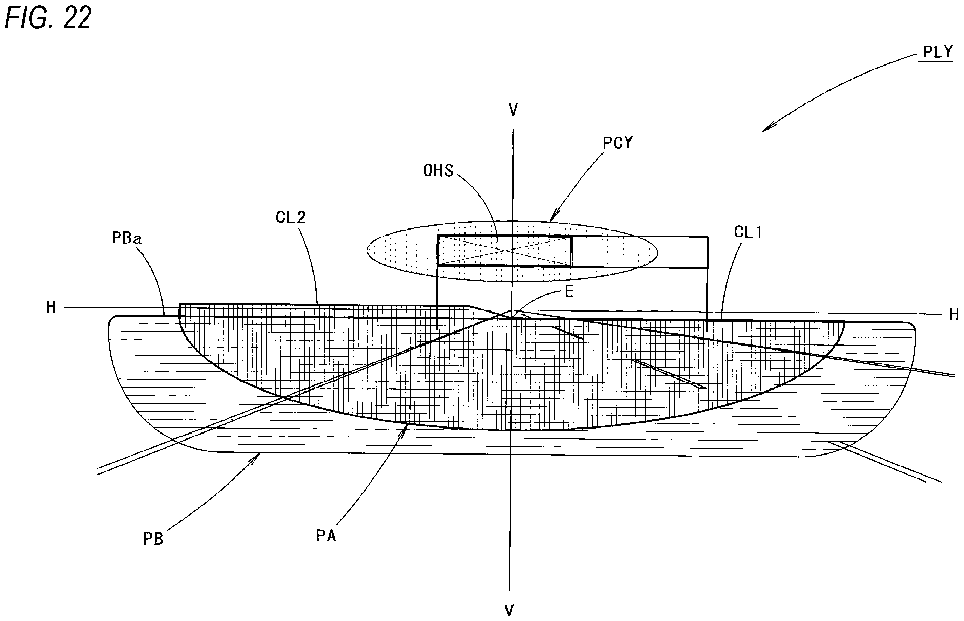

FIG. 22 is a diagram illustrating a light distribution pattern for low beam PLY formed by light emitted from the vehicle lamp 10Y in phantom. In the configuration illustrated in FIG. 22, the same components as those illustrated in FIG. 6 are denoted by the same reference numerals, and the description thereof is omitted.

As illustrated in FIG. 22, in the light distribution pattern for low beam PLY according to the third embodiment, in addition to the main region light distribution pattern PA and the diffusion region light distribution pattern PB, a light distribution pattern for OHS illumination PCY is additionally formed in a space above the cutoff lines CL1 and CL2. The main region light distribution pattern PA is formed by light emitted from the first lamp unit 30AY. The diffusion region light distribution pattern PB and the light distribution pattern for OHS illumination PCY are formed by light emitted from the second lamp unit 30BY.

The diffusion region light distribution pattern PB is a light distribution pattern constituting a diffusion region of the light distribution pattern for low beam PLY. The diffusion region light distribution pattern PB is formed as a horizontally long light distribution pattern.

In the second lamp unit 30BY, the projection lens 32BY is formed in a cylindrical lens shape extending in the left-right direction, and the upward reflection surface 38BaY of the shade 38BY is implemented by a horizontal plane including the optical axis Ax2. Therefore, the upper end edge PBa of the diffusion region light distribution pattern PB extends in the horizontal direction at substantially the same height as the oncoming-traffic lane side cutoff line CL1.

The light distribution pattern for OHS illumination PCY is a light distribution pattern with which an overhead sign OHS provided above a vehicle front road surface is illuminated. The light distribution pattern for OHS illumination PCY is formed as a horizontally long light distribution pattern spreading in the left-right direction around the line V-V at a position separated upward from the cutoff lines CL1 and CL2.

The light distribution pattern for OHS illumination PCY is formed in such a manner that the light emitted from the light source 34B and reflected downward by the first additional reflection surface 36BbY of the reflector 36BY is reflected toward the front of the lamp by the second additional reflection surface 38BbY of the shade 38BY, and then is emitted toward the front of the lamp through the projection lens 32BY. The light distribution pattern for OHS illumination PCY has a lower brightness than the main region light distribution pattern PA and the diffusion region light distribution pattern PB.

Next, operations and effects of the third embodiment will be described.

The vehicle lamp 10Y according to the present embodiment includes the first lamp unit 30AY which forms a main region of the light distribution pattern for low beam PLY and the second lamp unit 30BY which forms a diffusion region of the light distribution pattern for low beam PLY. Therefore, the vehicle lamp 10Y may easily form the light distribution pattern for low beam PLY with a light distribution suitable for the traveling of the vehicle.

The first lamp unit 30AY and the second lamp unit 30BY shield a part of the light emitted from the light sources 34A and 34B and reflected by the reflectors 36AY and 36BY by the shades 38A and 38BY arranged between the reflectors 36AY and 36BY and the projection lenses 32A and 32BY to form the cutoff lines CL1 and CL2 of the light distribution pattern for low beam PLY. The shades 38A and 38BY have the upward reflection surfaces 38Aa and 38BaY that reflect the reflected light from the reflectors 36AY and 36BY upward toward the projection lenses 32A and 32BY, and thus the luminous flux utilization rate of the light emitted from the light sources 34A and 34B can be increased.

The second lamp unit 30BY is provided with the first additional reflection surface 36BbY that reflects the light emitted from the light source 34B toward the front end portion of the upward reflection surface 38BaY of the shade 38BY at the front end portion of the reflector 36BY. Further, the second additional reflection surface 38BbY that reflects the light emitted from the light source 34B and reflected by the first additional reflection surface 36BbY toward the projection lens 32BY is formed at the position in the front of and below the lamp with respect to the upward reflection surface 38BaY of the shade 38BY. Further, the reflector 36BY and the shade 38BY are integrally formed. Therefore, the present embodiment can exert the following operations and effects.

That is, in the second lamp unit 30BY, the reflected light from the first additional reflection surface 36BbY of the reflector 36BY is reflected toward the projection lens 32BY by the second additional reflection surface 38BbY of the shade 38BY. Accordingly, when the light distribution pattern for low beam PLY is formed, the light distribution pattern for OHS illumination PCY can be formed in a space above the cutoff lines CL1 and CL2. The second lamp unit 30BY forms a diffusion region of the light distribution pattern for low beam PLY. Therefore, the diffusion region light distribution pattern PB can be formed with a required light distribution even though the width of the upward reflection surface 38BaY of the shade 38BY in the front-rear direction of the lamp is reduced. Therefore, even though the reflector 36BY and the shade 38BY are integrally formed in the second lamp unit 30BY, the molding can be easily performed, and thus the number of components of the vehicle lamp 10Y can be reduced.

As described above, according to the present embodiment, the vehicle lamp 10Y including the first lamp unit 30AY and the second lamp unit 30BY which form the light distribution pattern for low beam PLY can form the light distribution pattern for OHS illumination PCY without increasing the number of components of the vehicle lamp 10Y.

Moreover, in the present embodiment, the reflector 36AY and the shade 38A of the first lamp unit 30AY and the reflector 36BY and the shade 38BY of the second lamp unit 30BY are integrally formed. Therefore, the present embodiment can exert the following operations and effects.

That is, the second lamp unit 30BY forms the light distribution pattern for OHS illumination PCY, and thus no additional configuration is required for the first lamp unit 30AY which forms the main region light distribution pattern PA, and the reflector 36AY and the shade 38A can be easily formed integrally. Therefore, even though the reflector 36AY and the shade 38A of the first lamp unit 30AY are integrally formed with the reflector 36BY and the shade 38BY of the second lamp unit 30BY, the molding can be easily performed. Accordingly, the number of components of the vehicle lamp 10Y can be further reduced.

In the present embodiment, a reflection surface of the reflector 36BY of the second lamp unit 30BY is smaller than a reflection surface of the reflector 36AY of the first lamp unit 30AY. Therefore, the vehicle lamp 10Y can be miniaturized while maintaining a light distribution configuration required for each of the first lamp unit 30AY and the second lamp unit 30BY.

In the present embodiment, the projection lens 32A of the first lamp unit 30AY and the projection lens 32BY of the second lamp unit 30BY are integrally formed as a projection lens assembly 22Y. Therefore, the number of components of the vehicle lamp 10Y can be further reduced.

In the third embodiment, it has been described that the front end edge 38Aa1 and the rear end edge 38Aa2 of the upward reflection surface 38Aa of the shade 38A of the first lamp unit 30AY extends toward both left and right sides in a curved manner toward the front of the lamp. However, the front end edge 38Aa1 and the rear end edge 38Aa2 may extend linearly toward both left and right sides.

In the third embodiment, it has been described that the front end edge 38Ba1Y and the rear end edge 38Ba2Y of the upward reflection surface 38BaY of the shade 38BY of the second lamp unit 30BY extend linearly toward both left and right sides. However, the front end edge 38Ba1Y and the rear end edge 38Ba2Y may extend toward both the left and right sides in a curved manner toward the front of the lamp.

In the third embodiment, the second lamp unit 30BY is disposed on the left of the first lamp unit 30AY as the lamp unit assembly 20Y, and when the second lamp unit 30BY is disposed on the right of the first lamp unit 30AY, the same operations and effects as those in the above embodiment can also be obtained. When such a configuration is adopted, the lamp unit assembly can be made suitable for a vehicle lamp disposed at a right front end portion of the vehicle.

### Modification of Third Embodiment

Next, a modification of the third embodiment will be described.

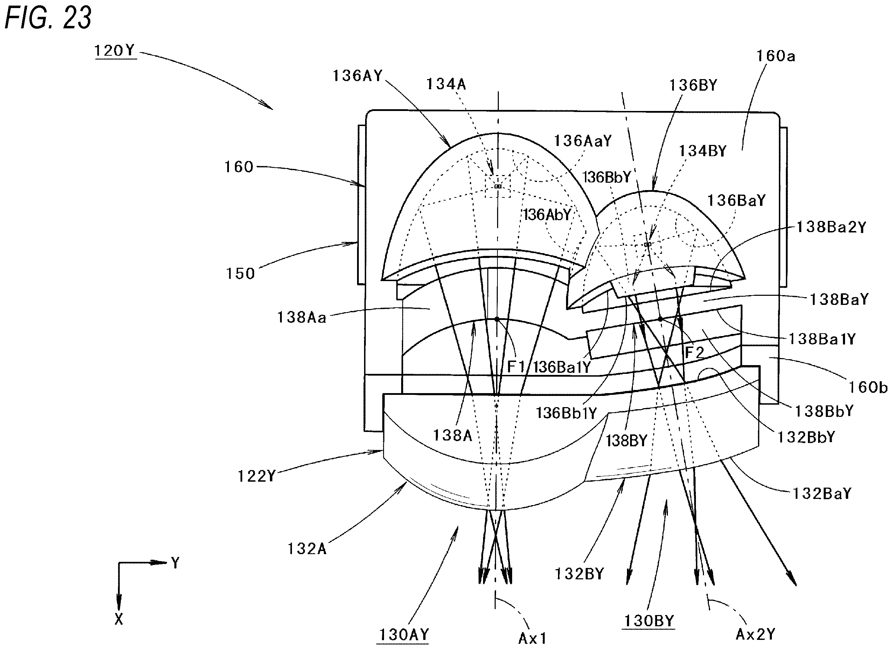

FIG. 23 is a plan view illustrating a lamp unit assembly 120Y of a vehicle lamp according to the present modification.

As illustrated in FIG. 23, the lamp unit assembly 120Y according to the present modification is also a lamp unit assembly of a vehicle lamp disposed at a left front end portion of a vehicle. A configuration of a first lamp unit 130AY of the lamp unit assembly 120Y is substantially the same as that of the third embodiment. However, a configuration of a second lamp unit 130BY is partially different from that of the third embodiment.

That is, the first lamp unit 130AY includes the projection lens 132A, the light source 134A, a reflector 136AY, and the shade 138A similar to the first lamp unit 30AY of the third embodiment.

On the other hand, in the second lamp unit 130BY, directions of a light source 134BY, a reflector 136BY, and a shade 138BY are different from those of the third embodiment. Further, a shape of a projection lens 132BY is different from that of the third embodiment.

Specifically, in the present modification, the light source 134BY of the second lamp unit 130BY is also disposed on the front of the lamp with respect to the light source 134A of the first lamp unit 130AY. However, the light source 134BY, the reflector 136BY, and the shade 138BY of the second lamp unit 130BY are disposed in a direction inclined by a predetermined angle in a left direction with respect to a front direction of the lamp.

In the present modification, the reflector 136BY also has a reflection surface shape smaller than that of the reflector 136AY of the first lamp unit 130AY. However, the present modification is different from the third embodiment in that both the reflectors 136AY and 136BY are arranged in a partially overlapping positional relation in a front view of the lamp. Therefore, a left end portion of a reflection surface 136AaY of the reflector 136AY is partially lost, and the lost portion is provided with a standing wall portion 136AbY that extends in a substantially vertical plane along an outer peripheral edge shape of the reflector 136BY.

A front end portion of the reflector 136BY is provided with a first additional reflection surface 136BbY similar to the first additional reflection surface 36BbY of the third embodiment.

An upward reflection surface 138BaY of the shade 138BY is implemented by a horizontal plane including an optical axis Ax2Y as an axis line extending in a direction inclined by a predetermined angle in the left direction with respect to the front direction of the lamp so as to pass through a light emitting center of the light source 134BY. A front-rear width of the upward reflection surface 138BaY is smaller than that of an upward reflection surface 138Aa of the shade 138A.

A reflection surface 136BaY and the first additional reflection surface 136BbY of the reflector 136BY are formed so that front end edges 136Ba1Y and 136Bb1Y are located on the rear of the lamp with respect to a rear end edge 138Ba2Y of the upward reflection surface 138BaY of the shade 138BY. Accordingly, the shade 138BY and the reflector 136BY do not overlap each other in a plan view.

A second additional reflection surface 138BbY similar to the second additional reflection surface 38BbY of the third embodiment is formed at a position in the front of and below the lamp with respect to the upward reflection surface 138BaY of the shade 138BY.

In the lamp unit assembly 120Y, substrates (not illustrated) of the first lamp unit 130AY and the second lamp unit 130BY are supported by the same heat sink 150 as the heat sink 50 of the third embodiment, and the heat sink 150 is supported by the holder 160.

The holder 160 includes the horizontal flange portion 160a extending along the horizontal plane so as to surround outer peripheral portions of the reflectors 136AY and 136BY of the first lamp unit 130AY and the second lamp unit 130BY. The reflectors 136AY and 136BY and the shades 138A and 138BY of the first lamp unit 130AY and the second lamp unit 130BY are formed integrally with the holder 160.

In the present modification, the projection lenses 132A and 132BY of the first lamp unit 130AY and the second lamp unit 130BY are also integrally formed as a projection lens assembly 122Y and are supported by the holder 160.

The projection lens 132A has the same configuration as the projection lens 32A of the above embodiment.

On the other hand, the projection lens 132BY has the same up-down width as the projection lens 132A, and extends in a toroidal lens shape from a right end portion of the projection lens 132BY to the left direction in a curved manner toward the rear of the lamp. That is, a front surface 132BaY of the projection lens 132BY extends in an arc shape with a convex curved vertical cross-sectional shape. A rear surface 132BbY of the projection lens 132BY is formed in a cylindrical surface shape. A curvature of the front surface 132BaY of the projection lens 132BY is set such that the rear focal point F2 in the vertical cross section including the optical axis Ax2Y is located at a front end edge 138Ba1Y of the upward reflection surface 138BaY of the shade 138BY.

In the present modification, a front end portion of the holder 160 is also provided with the frame portion 160b substantially similar to the holder 60 of the third embodiment. The projection lens assembly 122Y is supported by the holder 160 by bringing peripheral portions of the rear surfaces of the two projection lenses 132A and 132BY into contact with the frame portion 160b of the holder 160 from the front of the lamp.

As described above, in the lamp unit assembly 120Y, the reflectors 136AY and 136BY and the shades 138A and 138BY of the first lamp unit 130AY and the second lamp unit 130BY are formed integrally with the holder 160. However, the reflectors 136AY and 136BY, the shades 138A and 138BY, and the holder 160 do not have overlapping portions in the plan view, and thus when these elements are molded into a single injection molded product, a structure of a mold used for the injection molded product is simple.

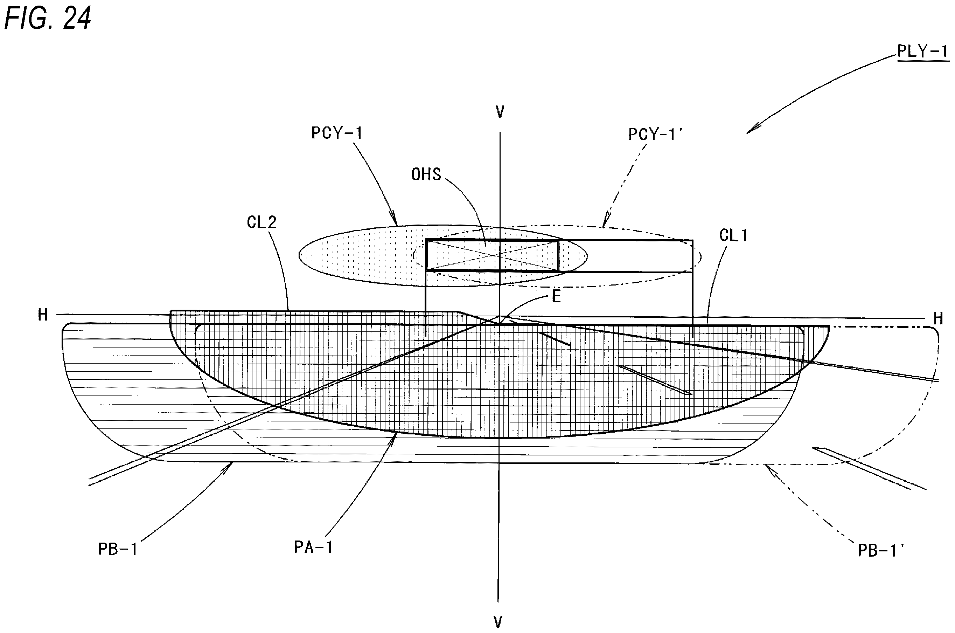

FIG. 24 is a diagram illustrating a light distribution pattern for low beam PLY-1 formed by light emitted from the vehicle lamp according to the present modification in phantom.

As indicated by a solid line in FIG. 24, similar to the light distribution pattern for low beam PLY of the third embodiment, in the light distribution pattern for low beam PLY-1, in addition to the main region light distribution pattern PA-1 and the diffusion region light distribution pattern PB-1, the light distribution pattern for OHS illumination PCY-1 is additionally formed in the space above the cutoff lines CL1 and CL2.

At this time, the main region light distribution pattern PA-1 formed by the light emitted from the first lamp unit 130AY is substantially the same as that in the third embodiment.

On the other hand, the diffusion region light distribution pattern PB-1 and the light distribution pattern for OHS illumination PCY-1 formed by light emitted from the second lamp unit 130BY are displaced to the left direction with respect to the diffusion region light distribution pattern PB and the light distribution pattern for OHS illumination PCY in the third embodiment, and are formed in substantially the same shape as these patterns.

A diffusion region light distribution pattern PB-1' and a light distribution pattern for OHS illumination PCY-1' indicated by two-dot chain lines in FIG. 24 are light distribution patterns formed by light emitted from another vehicle lamp. The other vehicle lamp is a vehicle lamp including a lamp unit assembly in which the arrangements of the first lamp unit 130AY and the second lamp unit 130BY are reversed left and right with respect to the lamp unit assembly 120Y, and is disposed at a right front end portion of the vehicle. The diffusion region light distribution pattern PB-1' and the light distribution pattern for OHS illumination PCY-1' are light distribution patterns formed by light emitted from a second lamp unit of the other vehicle lamp.

The diffusion region light distribution pattern PB-1' and the light distribution pattern for OHS illumination PCY-1' are formed as light distribution patterns bilaterally symmetrical to the diffusion region light distribution pattern PB-1 and the light distribution pattern for OHS illumination PCY-1 with respect to the line V-V.

As described above, the pair of left and right diffusion region light distribution patterns PB-1 and PB-1' partially overlap each other, and thus a wider light distribution pattern is formed in the entire vehicle. In addition, the pair of left and right light distribution patterns for OHS illumination PCY-1 and PCY-1' partially overlap each other, and thus the overhead sign OHS is illuminated over a wider range than in the case of only the light distribution pattern for OHS illumination PCY-1, and a visibility thereof is enhanced.

In the present modification, the reflector 136BY of the second lamp unit 130BY also has a reflection surface shape smaller than that of the reflector 136AY of the first lamp unit 130AY. Therefore, the vehicle lamp can be miniaturized while maintaining a light distribution function required for each of the first lamp unit 130AY and the second lamp unit 130BY.

In the present modification, the light source 134BY of the second lamp unit 130BY is disposed on the front of the lamp with respect to the light source 134A of the first lamp unit 130AY. Further, the reflector 136BY of the second lamp unit 130BY is disposed on the front of the lamp with respect to the reflector 136AY in the positional relation in which the reflector 136BY of the second lamp unit 130BY partially overlaps with the reflector 136AY of the first lamp unit 130AY in the front view of the lamp. Therefore, a left-right width of the lamp unit assembly 120Y can be reduced, and thus the vehicle lamp can be further miniaturized.

In the modification, another second lamp unit having a configuration bilaterally symmetrical to the second lamp unit 130BY may be additionally disposed on the right of the first lamp unit 130AY. In this case, the main region light distribution pattern, the pair of left and right diffusion region light distribution patterns, and the pair of left and right light distribution patterns for OHS illumination are formed as the light distribution pattern for low beam.

Numerical values shown as specifications in the above embodiments and the modifications thereof are merely examples, and as a matter of course, these numerical values may be set to different values as appropriate.

Further, the present disclosure is not limited to the configurations described in the above embodiments and the modifications thereof, and a configuration added with various other changes may be adopted.

The present application claims the priority based on Japanese patent application No. 2022-103657 filed on June 28, 2022, Japanese patent application No. 2022-103658 filed on June 28, 2022, and Japanese patent application No. 2022-103656 filed on June 28, 2022, and the entire contents described in the Japanese patent applications are incorporated herein by reference.

## Claims

1. A vehicle lamp comprising:
a first lamp unit and a second lamp unit arranged side by side in a left-right direction, wherein
the first lamp unit and the second lamp unit each include a projection lens, a light source disposed on the rear of the lamp with respect to a rear focal point of the projection lens, and a reflector configured to reflect light emitted from the light source toward the projection lens,
the projection lens of the second lamp unit extends obliquely toward the rear of the lamp from an end portion on a first lamp unit side to an end portion on an opposite side thereof,
the first lamp unit includes a first additional reflector and a second additional reflector configured to sequentially reflect the light emitted from the light source of the first lamp unit toward the projection lens of the second lamp unit, and
the second additional reflector is disposed on a side opposite to the second lamp unit with respect to the light source of the first lamp unit.

2. The vehicle lamp according to claim 1, wherein
the first additional reflector reflects the light emitted from the light source of the first lamp unit as convergent light toward the second additional reflector.

3. The vehicle lamp according to claim 1 or 2, wherein
the light source of the second lamp unit is disposed on the front of the lamp with respect to the light source of the first lamp unit,
the reflector of the second lamp unit is disposed on the front of the lamp with respect to the reflector of the first lamp unit in a positional relation in which the reflector of the second lamp unit partially overlaps with the reflector of the first lamp unit in a front view of the lamp, and
the first additional reflector is disposed on the rear of the lamp with respect to the reflector of the second lamp unit.

4. The vehicle lamp according to claim 1 or 2, wherein
the reflector, the first additional reflector, and the second additional reflector of the first lamp unit, and the reflector of the second lamp unit are integrally formed.

5. The vehicle lamp according to claim 1 or 2, wherein
the projection lens of the second lamp unit is formed in a toroidal lens shape.

6. The vehicle lamp according to claim 1 or 2, wherein
the projection lens of the first lamp unit and the projection lens of the second lamp unit are integrally formed.

7. A vehicle lamp comprising:
a first lamp unit and a second lamp unit arranged side by side in a left-right direction, wherein
the first lamp unit and the second lamp unit each include a projection lens, a light source disposed on the rear of the lamp with respect to a rear focal point of the projection lens, and a reflector configured to reflect light emitted from the light source toward the projection lens,
the reflector of the first lamp unit reflects the light emitted from the light source of the first lamp unit as light converging in the left-right direction,
the light source of the second lamp unit is disposed on the front of the lamp with respect to the light source of the first lamp unit, and
the reflector of the second lamp unit is disposed on the front of the lamp with respect to the reflector of the first lamp unit in a positional relation in which the reflector of the second lamp unit partially overlaps with the reflector of the first lamp unit in a front view of the lamp.

8. The vehicle lamp according to claim 7, wherein
a reflection surface of the reflector of the second lamp unit is smaller than a reflection surface of the reflector of the first lamp unit.

9. The vehicle lamp according to claim 7 or 8, wherein
the reflector of the first lamp unit and the reflector of the second lamp unit are integrally formed.

10. The vehicle lamp according to claim 7 or 8, wherein
the projection lens of the second lamp unit extends obliquely toward the rear of the lamp from an end portion on a first lamp unit side to an end portion on an opposite side thereof.

11. The vehicle lamp according to claim 7 or 8, wherein
the projection lens of the first lamp unit and the projection lens of the second lamp unit are integrally formed.

12. A vehicle lamp comprising:
a first lamp unit and a second lamp unit which form a light distribution pattern for low beam, wherein
the first lamp unit and the second lamp unit each include a projection lens, a light source disposed on the rear of the lamp with respect to a rear focal point of the projection lens, a reflector that covers the light source from the above and that is configured to reflect light emitted from the light source toward the projection lens, and a shade arranged between the reflector and the projection lens and configured to shield a part of the reflected light from the reflector so as to form a cutoff line of the light distribution pattern for low beam, the shade being provided with an upward reflection surface for reflecting the reflected light from the reflector upward toward the projection lens,
the first lamp unit forms a main region of the light distribution pattern for low beam, and the second lamp unit forms a diffusion region of the light distribution pattern for low beam, and
the second lamp unit is provided with a first additional reflection surface that reflects the light emitted from the light source toward a front end portion of the upward reflection surface of the shade at a front end portion of the reflector, and a second additional reflection surface that reflects the light emitted from the light source and reflected by the first additional reflection surface toward the projection lens at a position in the front of and below the lamp with respect to the upward reflection surface of the shade, and the reflector and the shade are integrally formed.

13. The vehicle lamp according to claim 12, wherein
the reflector and shade of the first lamp unit and the reflector and shade of the second lamp unit are integrally formed.

14. The vehicle lamp according to claim 13, wherein
the light source of the second lamp unit is disposed on the front of the lamp with respect to the light source of the first lamp unit, and
the reflector of the second lamp unit is disposed on the front of the lamp with respect to the reflector of the first lamp unit in a positional relation in which the reflector of the second lamp unit partially overlaps with the reflector of the first lamp unit in a front view of the lamp.

15. The vehicle lamp according to claim 13, wherein
a reflection surface of the reflector of the second lamp unit is smaller than a reflection surface of the reflector of the first lamp unit.

16. The vehicle lamp according to any one of claims 12 to 15, wherein
the projection lens of the first lamp unit and the projection lens of the second lamp unit are integrally formed.
